# Europäisches Patentamt

## European Patent Office

## Office européen des brevets

(19)

(11) Veröffentlichungsnummer: **0 252 096**
**B1**

(12) **EUROPÄISCHE PATENTSCHRIFT**

(45) Veröffentlichungstag der Patentschrift: **02.01.91**

(51) Int. Cl.⁵: **G 06 K 9/52**, G 06 K 9/42

(21) Anmeldenummer: **87900001.6**

(22) Anmeldetag: **22.12.86**

(86) Internationale Anmeldenummer:
**PCT/AT86/00077**

(87) Internationale Veröffentlichungsnummer:
**WO 87/03981 02.07.87 Gazette 87/14**

(54) **VERFAHREN ZUR MUSTERERKENNUNG.**

(30) Priorität: **20.12.85 AT 3702/85**

(43) Veröffentlichungstag der Anmeldung:
**13.01.88 Patentblatt 88/02**

(45) Bekanntmachung des Hinweises auf die
Patenterteilung:
**02.01.91 Patentblatt 91/01**

(84) Benannte Vertragsstaaten:
**AT BE CH DE FR GB IT LI LU NL SE**

(56) Entgegenhaltungen:
**IEEE Transactions on Pattern Analysis and
Machine Intelligence, Vol. 6, No. 1, January
1984, IEEE, (New York, US), J. Altmann et al. "A
fast correlation method for scale-and
translation-invariant pattern recognition" pages
46-57**

**Proceedings of the 3rd International Joint
Conference on Pattern Recognition, 8-11
November 1976, Coronado, CA., IEEE, (Long
Beach, US), K. Tanaka et al.: "Imprinted
character recognition using template matching
on spatial complex frequency plane", pages
663-666**

(73) Patentinhaber: **STEINPICHLER, Dietmar
Stadtplatz 23/10
A-3400 Klosterneuburg (AT)**
(73) Patentinhaber: **ÖSTERREICHER, Gerhard W.
Kirchstetterngasse 44/22
A-1160 Wien (AT)**

(72) Erfinder: **STEINPICHLER, Dietmar
Stadtplatz 23/10
A-3400 Klosterneuburg (AT)**
Erfinder: **ÖSTERREICHER, Gerhard W.
Kirchstetterngasse 44/22
A-1160 Wien (AT)**

(74) Vertreter: **Hofinger, Engelbert et al
Torggler-Hofinger Wilhelm-Greil-Strasse 16
A-6020 Innsbruck (AT)**

(56) Entgegenhaltungen:
**Pattern Recognition Letters, Vol. 2, No. 5,
September 1984, Elsevier Science Publishers
B.V., (Amsterdam, NL). L. Jacobson et al.:
"Invariant analogical image representation and
pattern recognition", pages 289-299**

**Proceedings of the IEEE, Vol. 65, Nr. 1, Januar
1977, "New Optical Transforms for Pattern
Recognition", D. Casasent und D. Psaltis, S.
77-84**

# EP 0 252 096 B1

**Beschreibung**

Die Erfindung bezieht sich auf ein Verfahren zur Analyse eines zweidimensionalen Bildes, wobei die strukturelle Übereinstimmung von gespeicherten Referenzmustern mit Bildinhalten bzw. -teilen, unabhängig von der Lage des genannten Bildinhaltes bzw.—teiles im zu analysierenden Bild ermittelt wird, indem das Bild einer zweidimensionalen Fouriertransformation unterzogen wird und die abgespaltene Amplitudenverteilung bzw. eine daraus ermittelbare Verteilung mit Amplitudenverteilungen bzw. daraus ermittelbare Verteilungen der Referenzmuster im Fourierbereich unter Ermittlung der jeweiligen Übereinstimmungswahrscheinlichkeit, des Verdrehwinkels und des Vergrößerungsfaktors zwischen Referenzmuster und Bildinhalt bzw. -teil verglichen wird.

Es besteht für viele Anwendungsbereiche die Aufgabe, zweidimensionale Bilder z.B. mittels einer Fernsehkamera zu erkennen bzw. zu identifizieren und deren Lage bezüglich eines Nullpunktes bzw. eines Achsenkreuzes eindeutig festlegen zu können. Es sei hier lediglich als Beispiel das exakte Positionieren des Greifarms eines industriellen Roboters in bezug auf ein bestimmtes, zu ergreifendes Objekt erwähnt. Unter zweidimensionalen Bildern werden im Rahmen der vorliegenden Erfindung zweidimensionale optische Bilder aber auch zweidimensionale Muster verstanden, die durch zweidimensional zugeordnete Werte gebildet sind, aber nicht unbedingt optischen Ursprungs sind, beispielsweise zweidimensionale Signale in der Sprachanalyse.

Aus der medizinischen Diagnostik ist die Anwendung einer eindimensionalen Fourieranalyse für Bildanalysen bekannt, insbesondere zur Umriß-Klassifizierung von Organen auf Röntgenbildern (Umriß-Linienerkennung).

Neben den bekannten Verfahren, die im Bildraum auf Umrißerkennungsverfahren (d.h. Ecken- und Kantenerkennung) basieren, sind auch optische Verfahren, bei denen mittels Linsenanordnungen zweidimensionale Fouriertransformationen durchgeführt werden, bekannt geworden. Durch diese Fouriertransformation wird erreich, daß ein Bildinhalt bzw. teil unabhängig von seiner Lage im zu analysierenden Bild ermittelt werden kann.

Die bekannten optischen Verfahren weisen jedoch erhebliche Nachteile auf, die eine Verwendung zur Bildanalyse in der Praxis bisher verhinderten. Zunächst ist das optische System äußerst aufwendig und teuer und dennoch in den einmal vorgesehenen Parametern, wie beispielsweise der zu analysierenden Bildgröße ziemlich unflexibel. Die Identifizierung eines Bildinhaltes bzw. teiles unabhängig von dessen Verdrehung und Größe im Bild und die Ermittlung des Ausmaßes der Verdrehung und Vergrößerung (Verkleinerung) gegenüber einem Referenzmuster ist mit solchen optischen Systemen prinzipiell in Echtzeit möglicht (vgl. Proceedings of IEEE, Vol. 65, Nr. 1, Jänner 1977, "New Optical Transforms for Pattern Recognition" von Daniel Casasent und Demetri Psaltis, Seiten 77—84). In der Praxis ist man weiters auch an der Stelle (bzw. den Stellen) interessiert, an der der identifizierte Bildteil im Bild vorkommt. Die Feststellung dieser Stellen ist mit optischen Verfahren in Echtzeit nicht möglich, da hierzu eine photographische Platte für Zwischenspeicherungen nötig wäre. Außerdem besteht zur Zeit überhaupt noch keine Möglichkeit, Bilder durch gezielte Interferenz zu rotieren und zu verkleinern.

Aufgabe der Erfindung ist es, ein Verfahren der eingangs genannten Gattung anzugeben, mit dem in Echtzeit auch die Lage von bereits identifizierten Bildinhalten- oder teilen im zu analysierenden Bild ermittelt werden kann. Weiters sollen mit dem System auch zweidimensionale Bilder (Muster) analysiert werden können, die nicht optischen Ursprungs sind.

Dies wird bei einem Verfahren der eingangs erwähnten Gattung dadurch erreicht, daß die Speicherung und Verarbeitung des Bildes und der Referenzmuster bzw. deren Fouriertransformierter in digitaler Form vollzogen werden und daß zur Lokalisierung eines mit einem Referenzmuster mit der ermittelten Übereinstimmungswahrscheinlichkeit übereinstimmenden Bildinhaltes bzw.—teiles im ursprünglichen Bild das betreffenden Referenzmuster bzw. dessen Fouriertransformierte durch inverse Drehstreckung mit dem ermittelten Verdrehwinkel und Vergrößerungsfaktor dem genannten Bildinhalt bzw. -teil hinsichtlich Größe und Orientierung angeglichen und schließlich festgestellt wird, bei welcher Lage bzw. bei welchen Lagen das so umgeformte Referenzmuster maximal mit einem Ausschnitt des Bildes übereinstimmt.

Durch die digitale Verarbeitung der Signale ist es erstmals möglich in Echtzeit auch die Lage der detektierten Bildinhalte bzw. -teile im zu analysierenden Bild zu ermitteln. Mit dem erfindungsgemäßen Verfahren sind beliebige Bildanalysen durchführbar, wenn entsprechende Referenzmuster vorgegeben werden.

Beim erfindungsgemäßen Verfahren kann jeder vollständig in der Bildebene enthaltene Bildinhalt bzw. -teil unabhängig von seiner Lage, Verdrehung, Vergrößerung, teilweiser Verdeckung bzw. Störung identifiziert werden, wobei gleichzeitig eine unabhängige Bewertung der Güte der Identifikation (d.h. Wahrscheinlichkeitswerte für die Objektidentifikation=Übereinstimmungswahrscheinlichkeit) geliefert wird. Eine solche Gütebewertung ist bei den nur in der Bildebene arbeitenden Verfahren nicht hinreichend möglich. Außerdem gibt das erfindungsgemäße Verfahren die Werte für Verdrehung Vergrößerung gegenüber einem Referenzmuster, sowie die Lage des identifizierten Bildinhaltes- bzw. teiles im Bild an. Ein wesentlicher Unterschied des erfindungsgemäßen Verfahrens gegenüber den bekannten Verfahren, die auf den Ecken und Kantenerkennung basieren, ist die volle Funktionstüchtigkeit bei teilweise abgedeckten Kanten, Ecken oder ungleicher Flächenausleuchtung der zu erkennenden Bilder, Objekte bzw. Muster. Umrißstörungen werden also toleriert und zwar in einem parametrisierbaren Ausmaß, indem im

2

Fourierbereich strukturelle Details des Bildes durch Filterung entweder ausgeblendet oder hervorgehoben werden.

Mit dem erfindungsgemäßen Verfahren ist es möglich, mehrere Referenzmuster im Bild zu identifizieren und zu lokalisieren. Die ist auch möglich, wenn ein Referenzmuster in verschiedenen Verdrehungen, Vergrößerungen öfters vorkommt. Selbst wenn ein Referenzmuster (Bildinhalt bzw. -teil) im Bild in derselben Vergrößerung und Orientierung (Verdrehung) mehrfach vorkommt, kann das System dieses identifizieren und konkret angeben, wo die einzelnen Referenzmuster im Bild liegen.

Gemäß einer weiteren Ausgestaltung des erfindungsgemäßen Verfahrens ist es besonders zweckmäßig, wenn die im Fourierbereich vorliegende Amplitudenverteilung des Bildes bzw. eine daraus ermittelbare Verteilung in Form einer reellen zweidimensionalen Bildmatrix in Polarkoordinaten ermittelt werden und daß anschließend eine zweidimensionale, polare Drehstreckungs-Korrelation dieser in Polarkoordinaten vorliegenden Bildmatrix mit ebenfalls in Polarkoordinaten vorliegenden reellen Referenzmatrizen (Amplitudenverteilung bzw. daraus ermittelbar Verteilung der Referenzmuster) von gespeicherten Referenzmustern durchgeführt wird, als deren Ergebnis Matrixwerte für Übereinstimmungswahrscheinlichkeiten der korrelierten reellen Bild- und Referenzmatrizen samt zugehörigen Verdrehwinkeln und Vergrößerungsfaktoren der Bildmatrix in bezug auf die Referenzmatrizen erhalten werden.

Es kann aber auch die Umwandlung der reellen Amplitudenmatrix bzw. einer daraus ermittelbaren reellen Bildmatrix im Fourierbereich in ein Polarkoordinatensystem mit logarithmischem Radius-Maßstab durchgeführt werden, wobei auch die Amplitudenmatrizen der Referenzobjekte bzw. daraus bildbare reelle Referenzmatrizen in einem Polarkoordinaten-System mit logarithmischem Radius-Maßstab gespeichert werden, wodurch die Drehstreckung zu einer Drehverschiebung wird, worauf eine polare Drehverschiebungs-Korrelation durchgeführt wird. Als Drehverschiebung wird dabei ein Vorgang bezeichnet, bei welchem die Drehstreckung insoferne entartet ist, als die Länge einer radialen Strecke unabhängig von der Vergrößerung im ursprünglichen nichtlogarithmischen Polarkoordinaten-System konstant bleibt, aber abhängig von dieser Vergrößerung die Strecke radial verschoben wird. Eine besonders zweckmäßige Lösung zur Durchführung des ersten Korrelationsvorganges besteht darin, daß die Koordinaten des logarithmischen Polarkoordinatensystems auf ein rechtwinkeliges Achsenkreuz übertragen werden, worauf eine diskrete, zweidimensionale, rechtwinkelige Korrelation der reellen Bildmatrix mit den Referenzmatrizen im Fourierbereich durchgeführt wird, wobei die Drehstreckung bzw. Drehverschiebung in zwei Verschiebungen längs der Achsen des Achsenkreuzes aufgelöst werden.

Die Referenzmuster können in den Referenzspeichern bereits von Anfang an enthalten sein, es ist jedoch vorteilhafter, wenn in einem Lernvorgang bekannte Referenzbilder eingegeben bzw. eingelesen werden und daß die nach der zweidimensionalen Fouriertransformation dieser Referenzbilder im Fourierbereich vorliegenden Matrizen als komplexe Matrizen oder als getrennte Amplituden- und Phasenmatrizen in Referenzspeichern in vorzugsweise abstrakt hierarchischer Ordnung gespeichert werden.

Unter abstrakt hierarchischer Ordnung wird dabei die Fähigkeit des vorliegenden Verfahrens verstanden, nach Elimination der Parameter Lage, Verdrehung und Vergrößerung selbständig in einem Lernvorgang aus mehreren ähnlichen Bildinhalten Oberbegriffe zu bilden und diese bzw. deren Fouriertransformierte dans als Referenzmatrizen zu speichern. Beispielsweise ist es möglich, ein sogenanntes "Standardgesicht", das die Merkmale vieler Gesichter enthält, oben in einer hierarchischen Struktur zu speichern. Dies hat den Vorteil, daß mit dem erfindungsgemäßen Verfahren sofort entschieden werden, ob es sich beim zu analysierenden Bild um ein Gesicht handelt, worauf erst in niedriger hierarchischer Ordnung weitergesucht wird. Außerdem hat man den Vorteil, daß auch ein dem System unbekanntes Gesicht von diesem zwar nicht identifiziert, aber zumindest als solches erkannt werden kann.

Es ist prinzipell möglich, daß zur Ermittlung der Lage bzw. der Lagen eines in der Fourierebene mit einer bestimmten Übereinstimmungswahrscheinlichkeit mit einem drehgestreckten Referenzmuster erkannten Bildinhaltes bzw. -teiles in der ursprünglichen Bildebene das mit den ermittelten Werten für Verdrehwinkel und Vergrößerungsfaktor invers drehgestreckte Referenzmuster in dieser Bildebene mit dem zu analysierenden Bild verglichen wird und das Übereinstimmungsmaximum bzw. die Übereinstimmungsmaxima detektiert werden.

Da die komplexen Matrizen des aktuellen Bildes und des Referenzmusters in der Fourierebene bereits vorliegen, ist es gemäß einer Weiterbildung des erfindungsgemäßen Verfahrens besonders vorteilhaft, bei der Ermittlung der Koordinatenwerte für die Lage des aktuellen Bildinhaltes bzw. -teiles im Bild vom Korrelationstheorem (Faltungssatz) Gebrauch zu machen, und damit die Zahl der Rechenschritte erheblich zu reduzieren. Dies erfolgt in der Weise, daß zur Ermittlung der Lage bzw. deren Lagen eines in der Fourierebene mit einer bestimmten Übereinstimmungswahrscheinlichkeit mit einem drehgestreckten Referenzmuster erkannten Bildinhaltes bzw. -teiles in der ursprünglichen Bildebene die mit den ermittelten Werten für Verdrehwinkel und Vergrößerungsfaktor invers drehgestreckte komplexe Referenzmatriz konjugiert komplex und elementweise mit der komplexen Bildmatrix im Fourierbereich multipliziert wird, worauf die komplexe Produktmatrix einer zweidimensionalen Fourierrücktransformation unterzogen wird, und daß schließlich das Maximum (die Maxima) der als Ergebnis dieser Korrelation erhaltenen Übereinstimmungswahrscheinlichkeitsmatrix detektiert wird (werden) und die zu diesem Maximum (zu diesen Maxima) gehörenden Koordinatenwerte für die Lage(n) des erkannten Bildinhaltes bzw. -teiles im ursprünglichen Bild ermittelt werden.

Ebenfalls unter Ausnutzung des Faltungssatzes ist es noch vorteilhafter, wenn bei Verwendung von halblogarithmischen Polarkoordinaten die inverse Drehstreckung der komplexen Referenzmatrix durch inverse ganzzahlige Verschiebung bezüglich der logarithmischen Polarkoordinaten durchgeführt wird, worauf die so erhaltene Matrix durch konstant zugeordnete Rückinterpolation auf kartesische Koordination umkoordinatisiert wird. Bei dieser Variante wird besonders auf eine Vermeidung von nicht konstant zugeordneten Interpolationen geachtet. Es ist nämlich für eine Drehstreckung einer Matrix (im vorliegenden Fall eine inverse Drehstreckung) über einem kartesischen Raster eine vom Ausmaß der jeweiligen Drehstreckung abhängige Interpolation nötig, da die nach der Drehstreckung erhaltenen Elemente i.a. nicht über Rasterpunkten des kartesischen Rasters liegen.

Durch die erwähnte Ausführungsform kann die Drehstreckung in logarithmischen Polarkoordinaten als Verschiebung ausgeführt werden und zwar ohne wesentliche Einschränkung um ganzzahlige Rasterabstände der logarithmischen Polarkoordinaten (also ohne Interpolation). Die Rückinterpolation dieser so erhaltenen durchgestreckten Matrix auf kartesische Koordinaten ist zwar immer noch nötig, kann aber, da die kartesischen und polaren Raster relativ zueinander konstant festgelegt sind, einer Liste entnommen werden, was den Rechenaufwand erheblich verringert.

Die einzig noch enthaltene Mehrdeutigkeit in der Objektverdrehung um 180° (die Amplitudenverteilung bzw. eine daraus ermittelbare Verteilung hat in der Fourierebene eine Periodizität von 180°) kann dadurch beseitigt werden, daß eine weitere inverse Drehstreckung mit dem um 180°C veränderten ermittelten Wert für den Verdrehwinkel und dem ermittelten Wert für den Vergrößerungsfaktor durchgeführt wird, worauf nach Durchführung der Korrelation gegebenenfalls vorhandene Maxima der Übereinstimmungswahrscheinlichkeit detektiert werden.

Um bei fehlender Flächenstrukturierung der Bilder unrichtige Korrelationsergebnisse mit Sicherheit zu vermeiden, kann in weiterer Ausgestaltung der Erfindung vorgesehen sein, daß sowohl die mit dem ermittelten Wert für den Verdrehwinkel bzw. die mit diesem um 180° veränderten Wert invers drehgestreckte reelle Referenzmatrix als auch die nach der zweidimensionalen Fouriertransformation vorliegende reelle Bildmatrix des aktuellen Bildes über je ein konturanhebendes O-Phasen-Filter geleitet werden, bevor sie zusammen mit den zugehörigen Phasenmatrizen der konjugiert komplexen Multiplikation unterzogen werden. Ein derartiges konturanhebendes O-Phasen-Filter hebt z.B. die Elemente der Amplitudenmatrix linear mit der Frequenz an, wodurch höhere Frequenzen (die ja von Kanten und Ecken herrühren) höher bewertet werden.

Die Erfindung wird nun an Hand eines Ausführungsbeispiels unter Bezugnahme auf die Zeichnungen näher erläutert. In diesen zeigen: Fig. 1 ein Blockschema eines Ausführungsbeispiels eines Systems zur Durchführung des erfindungsgemäßen Verfahrens, die Fig. 2A bis 6H Bildschirmdarstellungen der in verschiedenen Stufen des erfindungsgemäßen Verfahrens vorliegenden Bildverteilungen in der Bildebene bzw. im Fourierbereich, die Fig. 7 ein Blockschema eines weiteren Ausführungsbeispiels eines Systems zur Durchführung des erfindungsgemäßen Verfahrens und Fig. 8 einen eindimensionalen Schnitt in radialer Richtung durch in logarithmischen Polarkoordinaten dargestellte Raumfrequenzspektren im Fourierbereich.

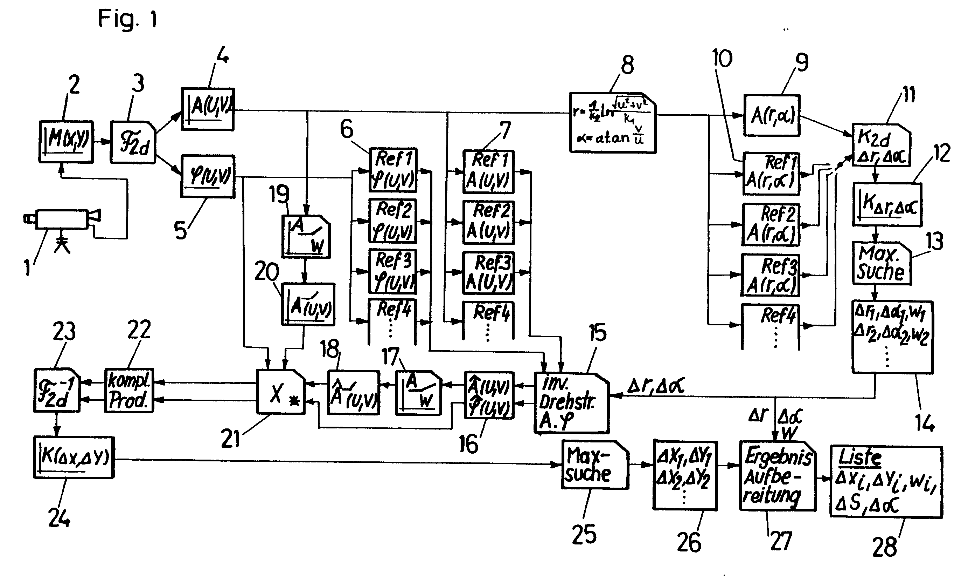

Wie Fig. 1 zeigt, läßt sich das erfindungsgemäße Verfahren durch eine Hintereinanderschaltung von signal- bzw. matrizenbearbeitenden Stufen realisieren. Generell sind in Fig. 1 sie signalverarbeitenden Stufen mit einer abgeschrägten rechten oberen Ecke versehen, während alle anderen Stufen Speicher (d.h. Matrizenspeicher) oder Zwischenspeicher darstellen.

Zunächst wird das aus einer Fernsehkamera 1 stammende Fernsehbildsignal oder ein anderes durch zweidimensional zugeordnete Werte gebildetes zweidimensionales Muster in einem Eingangs-Zwischenspeicher 2 gespeichert und anschließend in der Stufe 3 einer zweidimensionalen Fouriertransformation unterzogen. Anstelle der Kamera 1 kann auch ein synthetischer Bild- bzw. Mustergenerator bzw. beispielsweise eine Matrix aus gekreuzten Drähten mit bestimmten elektrischen oder magnetischen Potentialen an den Kreuzungspunkten herangezogen werden.

Im Falle eines Fernsehbildes entspricht die Amplitude der Helligkeit in den jeweiligen Fernsehbildpunkten. Dem Fernsehbild wird in dieser Bildebene ein Achsenkreuz zugeordnet: x/y. Dann lassen sich die Amplitudenwerte als Matrix A (M,N) anschreiben, wobei M/N der Anzahl der Rasterpunkte in der jeweiligen x/y-Richtungen entspricht. Es ist auch die in Fig. 1 gewählte Bezeichnungsweise M (x,y) für die Matrix in der x,y-Ebene möglich: Für das gegenständliche Objektdetektierungsverfahren ist die Lage des Empfindlichkeitsfensters einer gegebenenfalls bilddarstellenden Kamera auf der spektralen Frequenzachse bedeutungslos (Infrarotbild, Nachtsichtbild,...).

Neben Fernsehbildern sind aber auch alle anderen zweidimensionalen Amplitudenwertbild bzw.-muster heranziehbar, die Bildinhalte bzw. -teile, z.B. ein bestimmtes Objekt wie ein Dreieck oder einen Buchstaben aufweisen. Als ein derartiges Beispiel kann auch eine Zeit-Frequenzbanddarstellung (Vocoder) eines Sprachsignales genannt werden, wo Amplitudenwerte in einem orthogonalen Frequenz-Zeit-Achsensystem aufgetragen werden.

Bei einem Fernsehbild ist eine Ablegung in einem Zwischenspeicher 2 erforderlich (Einzelbildeinfrierung).

Die Darstellung der zweidimensionalen Fouriertransformation lautet im kontinuierlichen Fall:

$$F(U,V) = \int\int_{-\infty}^{\infty} A(X,Y)e^{-2\pi j(UX+VY)}dXdY$$
$$A(X,Y) = \int\int_{-\infty}^{\infty} F(U,V)e^{2\pi j(UX+VY)}dUdV$$

im diskreten Fall:

$$F(u,v) = \frac{1}{MN}\sum_x\sum_y A(x,y)e^{-2\pi j\left(\frac{ux}{M} + \frac{vy}{N}\right)}$$
$$A(x,y) = \sum_u\sum_v F(u,v)e^{2\pi j\left(\frac{ux}{M} + \frac{vy}{N}\right)}$$

$$X = x \cdot \Delta x$$
$$Y = y \cdot \Delta y$$
$$U = u \cdot \Delta u$$
$$V = v \cdot \Delta v$$

$F(u,v)$ stellt das komplexe Spektrum dar und besteht aus den zwei reellen Matrizen $A(u,v)$... reelles Amplitudenspektrum und $\varphi=(u,v)$... reelles Phasenspektrum. Neben dieser Zerlegung in Amplitudenspektrum und Phasenspektrum ist auch im Bedarfsfall eine Zerlegung des komplexen Spektrums in Real- und Imaginärteilmatrizen möglich.

Das Ergebnis dieser zweidimensionalen Fouriertransformation wird in den Zwischenspeichern 4 für die Amplitudenmatrix des aktuellen Bildes bzw. Objektes bzw. Musters und 5 für die Phasenmatrix dieses Bildes bzw. Objektes bzw. Musters gespeichert.

Zur Festlegung des in der Fourierebene (u/v-Ebene) erforderlichen Abschnittes kann folgende Überlegung angestellt werden:

Die größte auftretende Raumfrequenz entspricht einer 0/1-Folge von Rasteramplitude zu benachbarter Rasteramplitude.

$$w_{max}=N/2 \text{ bzw. } M/2, \text{ für } N=M \text{ (quadr. Bild) gilt: } \sqrt{u^2+v^2}\leq w_{max}.$$

Die niedrigste enthaltene Frequenz hat eine Wellenlänge von

$$\lambda_{max}=\frac{N\Delta x}{w_{min}}=N\Delta x=\text{Bildbreite } (N=M),$$

wobei $w_{min}=1$, d.h. eine Schwingung pro N bzw. M ist.

Aufgrund der Bedingung $F(-u, -v)=F^*(u,v)$ kann die Matrizenhöhe beider Matrizen ohne Informationsverlust halbiert werden (ausgenommen Nullinie).

Die Eigenschaften dieser diskreten, zweidimensionalen Fouriertransformation sind:

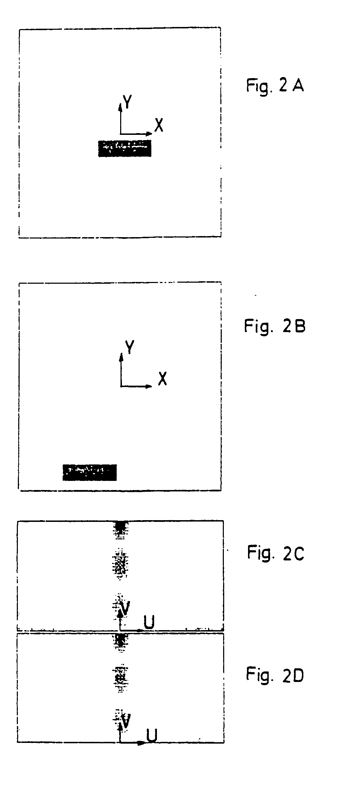

Die Amplitudenmatrix ist bildinhalts-lageinvariant, d.h. ein und derselbe Bildinhalt kann (in der x/y-Ebene) beliebig verschoben werden, ohne daß sich das Amplitudenspektrum bzw. die Amplitudenmatrix (in der u/v-Ebene) verändert (vgl. Fig. 2A—2D).

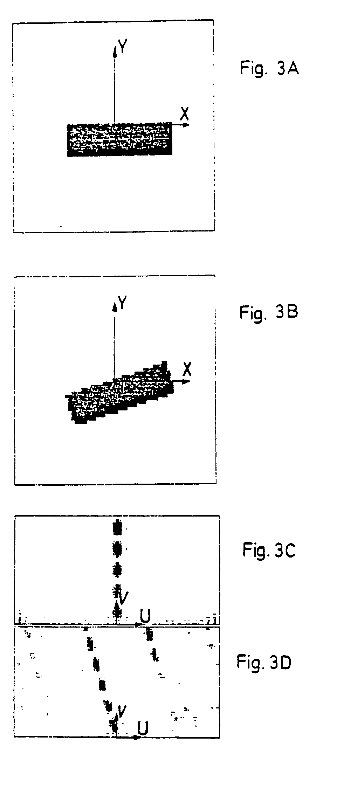

Einer Vergrößerung in der Bildebene (x/y-Ebene) entspricht eine proportionale Verkleinerung des Amplitudenmusters bzw. der Amplitudenmatrix in der Fourierebene (u/v-Ebene; vgl. Fig. 2A—2D und Fig. 3A—3D). (Selbstverständlich wird auch die Phasenmatrix proportional verkleinert).

Einer Verdrehung in der Bildebene (x/y-Ebene) entspricht eine Verdrehung gleichen Ausmaßes und Richtung in der Fourierebene (u/v-Ebene; vgl. Fig. 3A—3D und 4A—4D).

Diese Aussagen werden durch die Fig. 2A—4D veranschaulicht, in denen ausgedruckte Schirmbilddarstellungen (Amplitude als Schwärzung dargestellt) wiedergegeben sind. So zeigen Fig. 2A und Fig. 2B zwei lageverschobene Bildinhalte M(x,y) in der ursprünglichen Bildebene (x/y-Ebene). Die Fig. 2C und 2D zeigen die jeweils zugehörigen Amplitudenmatrizen A(u,v) nach Durchführung der zweidimensionalen Fouriertransformation, wie sie sich im Zwischenspeicher 4 in der u/v-Ebene darstellen. Man sieht, daß die Darstellungen in den Fig. 2C und 2D ident sind, d.h. daß die Lageverschiebung in der x/y-Ebene auf die Amplitudenmatrix in der u/v-Ebene ohne Einfluß ist (Ortsinvarianz).

Die Fig. 3A und 3B zeigen dasselbe Rechteck M(x,y) in der x/y-Ebene wie die Fig. 2A, jedoch um den Faktor 2 vergrößert, wobei zusätzlich in Fig. 3B das Rechteck gegenüber dem Rechteck in Fig. 3A in der x/y-Ebene verdreht ist. Fig. 3C und 3D zeigen die den Bildinhalten (Rechtecken) gemäß Fig. 3A und 3B zugeordneten Amplitudenmatrizen A(u,v), wobei durch einen Vergleich der Fig. 2A und 3A einerseits und der Fig. 2C und 3C andererseits die umgekehrt proportionale Vergrößerung (d.h. Verkleinerung) der Abbildung in der u/v-Ebene gegenüber der Abbildung in der x/y-Ebene ersichtlich ist; aus einem Vergleich der Fig. 3A und 3B einerseits mit den Fig. 3C und 3D andererseits folgt unmittelbar die äquivalente Verdrehung der Amplitudenmatrix in der u/v-Ebene bei Bilddrehung in der x/y-Ebene, und zwar in beiden Ebenen jeweils um den gleichen Drehwinkel.

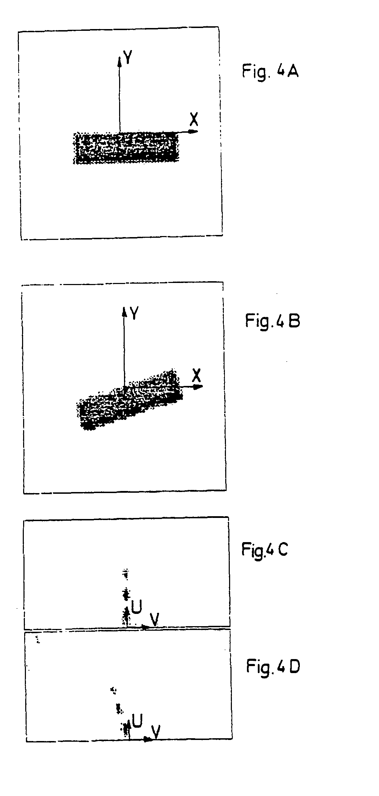

In den Fig. 4A—4D ist eine realistische Darstellung des geraden und verdrehten Rechteck-Balkens gemäß den Fig. 3A und 3B samt Transformation in die u/v-Ebene gezeigt, welche Darstellung der Abbildung durch eine Video-Kamera entspricht (Randglättung). Die aus den Bildern von Fig. 4A und 4B abgeleiteten Amplitudenmatrizen A(u,v) gemäß den Fig. 4C und 4D zeigen insbesondere im verdrehten Fall (Fig. 4D) die in Fig. 3D auftretenden Kantenstörungen (bedingt durch zu scharfe Kantenrasterung in Fig. 3B) nicht mehr.

Wie im kontinuierlichen Fall gilt auch im Fall der diskreten Fouriertransformation im Komplexen das Additions- und Linearitätstheorem:

$$F(A_1+A_2)=F(A_1)+F(A_2),\ F(c \cdot A_1)=c \cdot F(A_1)$$

Es sind im Muster der Amplitudenmatrix der u/v-Ebene die beiden Suchdimensionen "Lage in x-Richtung" und "Lage in y-Richtung" abgespalten (diese sind ausschließlich in der φ-Matrix enthalten), während Objektidentifikation, Größenbestimmung (eventuell direkt als Entfernung interpretierbar) und Verdrehungsbestimmung qualitativ ungemindert auch bei mehreren und beliebig verschobenen Objektmustern nachfolgend bestimmt werden können.

Von den fünf Suchdimensionen Objektidentität (Identität eines Bildinhaltes bzw. -teiles), Vergrößerung (gegebenenfalls entsprechend Entfernung), Verdrehung, Lage in x-Richtung und Lage in y-Richtung können nun die ersten drei Parameter abgespalten von den letzten beiden vollständig und entkoppelt bestimmt werden.

Die Fouriertransformation sorgt zudem dafür, daß lokale Störungen in der Bildebene ausschließlich in den Amplitudenwerten höherer Frequenzen Auswirkungen zeigen. Z.B. unterscheiden sich die Amplitudenmatrizen zweier gleich proportionaler, gleich verdrehter und gleich großer Rechtecke, von denen eines gerundete Ecken hat, nur in den höheren Frequenzen.

In der x/y-Ebene anschaulich gemacht, entspricht der diskreten Fouriertransformation die Zerlegung eines in der x/y-Ebene befindlichen Musters in Querwellen, die mit verschiedenen Amplituden, Frequenzen und Laufrichtungen über das Bild laufen und es durch ihre Summierung erzeugen. Die Laufrichtungen ergeben sich als alle in einem Raster einzeichenbaren Punkt-zu-Punkt-Verbindungen. An Frequenzen treten alle Kombinationen der rechtwinkelig zueinander laufenden Grund- und Oberwellen auf.

Nun ist das eben in Analyse befindliche Amplitudenspektrum bzw. die Amplitudenmatrix, gegebenenfalls mehrere beliebige, gestörte (z.B. im Fall eines Werkstückes solche mit teilweise verdeckten oder beschädigten Kanten) Objekte enthaltend, mittels Drehstreckung mit den vorher in den Referenzspeichern 6,7 bzw. 10 abgespeicherten Amplitudenspektren bzw. Amplitudenmatrizen der Referenzobjekte zu vergleichen.

Um diesen Vergleich durchführen zu können, wird vorteilhafterweise zunächst eine Transformation der orthogonalen Amplitudenmatrix in eine polare vorgenommen, wobei für den Radius eine logarithmische Skala gewählt wird. Dadurch degenerieren Vergrößerung/Verkleinerung eines Objektes im Bildraum zu einer Verschiebung (Rechenschiebereffekt). Diese Transformation erfolgt in der Umwandlungsstufe 8 gemäß folgenden Formeln:

$$F(u,v) \rightarrow F(r,\alpha),\qquad \begin{aligned} u&=R\ \cos\alpha\\ v&=R\ \sin\alpha \end{aligned}\qquad R=k_1 e^{k_2 \cdot r}$$

Anschließend erfolgt eine diskrete, zweidimensionale, rechtwinkelige Korrelation der im Zwischenspeicher 9 in logarithmischen Polarkoordinaten enthaltenen Amplitudenmatrix mit den aus den Referenzspeichern 10 auswählbaren Referenz-Amplitudenmatrizen, wobei die Übereinstimmungswahrscheinlichkeits-Matrix oder Korrelationsmatrix

$$K(x,y)=A_1 \otimes A_2(x,y)=\sum_{x'}\sum_{y'}A_1(x'-x,\ y'-y) \cdot A_2(x',y')$$

ermittelt wird.

Dieser Korrelationsschritt wird in der Korrelationsstufe 11 vorgenommen, deren Eingänge mit der in logarithmischen Polarkoordinaten $r_1$, α dargestellten Amplitudenmatrix $A(r_1,$ α) des von der Kamera 1 erfaßten aktuellen Bildes aus dem Zwischenspeicher 9 und einer auswählbaren, ebenfalls in logarithmischen Polarkoordinaten $r_1$, α dargestellten Amplitudenmatrix $A_{Ref_1}(r_1,α)$ $R_{Ref_2}(r_1,α)$...aus dem Referenzspeicher 10 beaufschlagt sind.

Wie schon gesagt, wird der Vergrößerungsvergleich infolge der logarithmischen Radius-Skala zu einem Verschiebungsvergleich, wobei der Verdrehungswinkel α des Objektes in der ursprünglichen x/y-Ebene nicht beeinflußt wird.

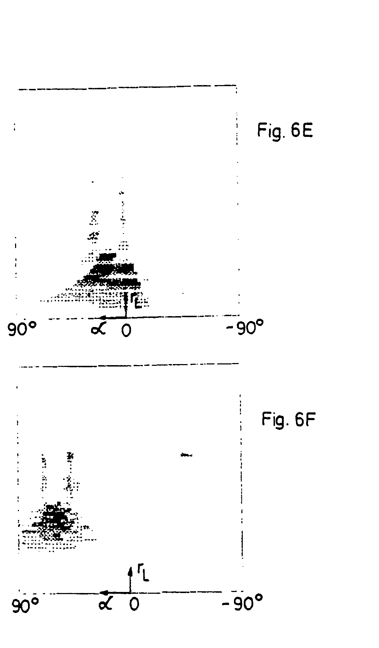

Wenn die logarithmischen Polarkoordinaten auf einem rechtwinkeligen Koordinatenkreuz aufgetragen werden (vgl. z.B. die später noch näher erläuterten Fig. 6E—6G), degeneriert die beim Korrelationsvorgang vorzunehmende Drehstreckung bzw. Drehverschiebung der Referenz-Amplitudenmatrix zu zwei linearen Verschiebungen längs der $r_1$- und α-Achse. Es wird somit jeder Verdrehungs-Vergrößerungsvergleich (Drehstreckung) zu einem Verschiebungsvergleich (Rechenschiebereffekt).

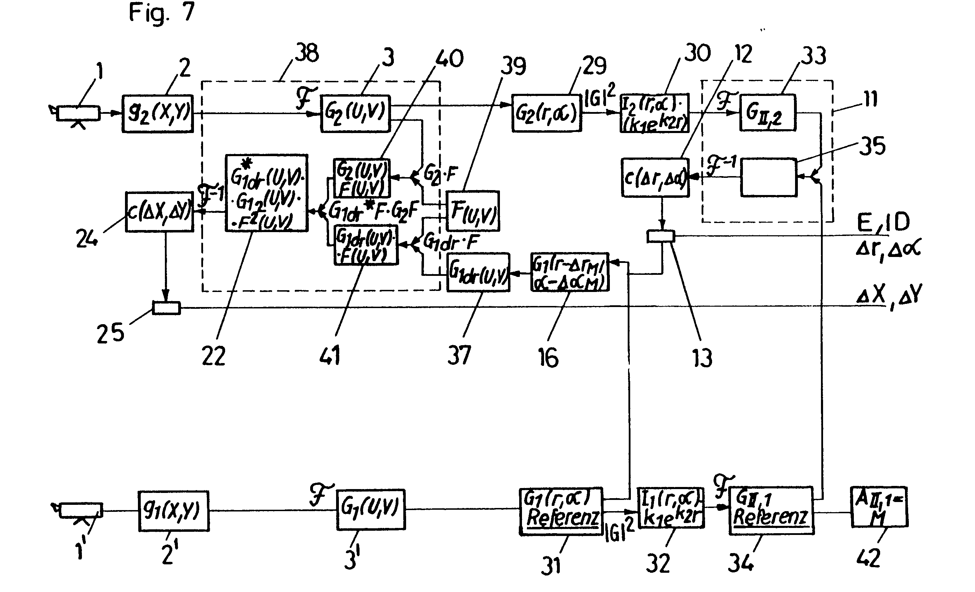

Anstelle der dem Korrelationsschritt unterworfenen Amplitudenmatrizen $A(r_1, \alpha)$ und $A_{Ref_1}(r_1,\alpha)$ können—wie es im Zusammenhang mit Fig. 7 noch näher erläutert werden wird—auch die entsprechenden Leistungsmatrizen (d.h. die quadrierten Amplitudenmatrizen) herangezogen werden. Dadurch wird die Qualität des Korrelationsergebnisses erhöht. Zu diesem Zweck kann beispielsweise der Umwandlungsstufe 8 eine Quadrierungsstufe vor- bzw. nachgeschaltet werden.

Die im Zwischenspeicher 12 gespeicherte zweidimensionale Korrelationsmatrix $K(\Delta r,\Delta\alpha)$ stellt bereits das Ergebnis der Korrelation dar. Man kann sich diese Korrelationsmatrix als eine über der $\Delta r,\Delta\alpha$, -Ebene ausgespannte wellige Fläche mit einem oder mehreren gipfelartigen Maxima veranschaulichen. Dieses Maximum bzw. diese Maxima werden mit der Stufe 13 für Maximumsuche detektiert und die Maximumsamplitude, die die Übereinstimmungswahrscheinlichkeit $w_1$ von aktuellem Bildinhalt und Referenzmuster darstellt, sowie die zugehörigen Werte $\Delta r$ für die Vergrößerung gegenüber dem Referenzmuster und $\Delta\alpha$ für die Verdrehung gegenüber dem Referenzmuster im Zwischenspeicher 14 gespeichert. Zur Klassifikation der Maxima hinsichtlich Musterhälichkeit kann nicht nur die Höhe der Korrelationsmaxima, sondern auch deren relative Steilheit herangezogen werden. Vorteilhafterweise kann dabei vorgesehen sein, daß zur Ermittlung der relativen Steilheiten der Korrelationsmaxima der Korrelationsmatrix, diese logarithmiert und zweidimensional fouriertransformiert wird, worauf dieses so erhaltene zweidimensionale Spektrum vorzugsweise durch ein O-Phasen-Filter elementweise mit dem Abstand des jeweiligen Fouriervariablenpaares vom Ursprung der Fourierebene multipliziert und anschließend dieses neue Spektrum einer Fourier-Rücktransformation unterzogen wird, wobei die Amplitudenmaxima der so erhaltenen Matrix ein direktes Maß für die relative Steilheit der Korrelationsmaxima der Korrelationsmatrix sind. In einfacheren Fällen kann jedoch auch eine einfache Bewertung in Höhe der Korrelationsmaxima ausreichen.

Das Ergebnis jeder Amplituden (Referenzmuster/aktuelles Bild)—Korrelation ist somit bereits:

Objektidentifikation: Wahrscheinlichkeit $w_1$, $w_2$... des Enthaltenseins des Objekts—dies entspricht im wesentlichen der Amplitude der einzelnen Korrelationsmaxima.

Jedes hinreichend hohe und allenfalls genügend steile Maximum bestimmt durch seine Lage bereits Vergrößerung $\Delta r_1$, $\Delta r_2$... und Verdrehung $\Delta\alpha_1$, $\Delta\alpha_2$,... . Noch unbestimmt ist die Anzahl der bei der vorliegenden Vergrößerung der Verdrehung vorhandenen gleichen Objekte. (Wenn zur gleichen Kategorie eines Referenzmusters, z.B. Dreieck, mehrere Maxima mit jeweils zugehörigen $\Delta r$ und $\Delta\alpha$-Werten anfallen, dunn liegen in der x/y-Ebene mehrere Dreiecke mit unterschiedlicher Größe und/oder in unterschiedlichen Verdrehungen vor).

Lokale Fehler der Objekte bzw. Bildinhalte im Bild führen hier primär zu einer Reduktion des Maximumwertes, aber nicht zu einer Maximumverschiebung.

Abhängig von der Aufgabenstellung können sogar schon unmittelbar nach der Fouriertransformation durch selektive Amplitudenabsenkung solche Störungen eliminert werden. (Z.B.: Werstückerkennung trotz Oberflächenfehler versus Fehlerkennung; d.h. es wird ein rechteckiges Werkstück trotz einer beschädigten oder abgedeckten Kante als rechteckiges Werkstück erkannt bzw. es können bestimmte Kantenbeschädigungen unabhängig von der jeweiligen Werkstückform erkannt bzw. klassifiziert werden).

Dieselbe Eigenschaft ausnützend, kann, um die Anzahl der zur Identifizierung eines Bildinhaltes bzw. -teiles erforderlichen Korrelationen (Vergleich des aktuellen Bildes mit verschiedenen gespeicherten Referenzmustern, um die beste Übereinstimmungswahrscheinlichkeit zu ermitteln) zu senken, wie bereits erwähnt, hierarchisch vorgegangen werden; d.h. die aktuellen Bilder können durch Zuordnung zu sich aufsteigend differenzierenden Referenz-Musterklassen identifiziert werden. (Z.B. zuerst Vergleich, ob überhaupt ein Gesicht mit allgemeinen Gesichtsproportionen, wie Augen, Umrißoval, etc. vorliegt, dann bei Vorliegen einer Korrelation Aufruf der gegebenenfalls weiter unterteilten Portraitdatei).

Nachdem nun Größe, Verdrehung und Bildinhalts-Identität feststehen, soll nun noch die Lage des Bildinhaltes bzw. -teiles in der ursprünglichen Bildebene ermittelt werden.

Hier wird günstigerweise das Korrelationstheorem (Faltungssatz) angewendet:

$$S_1 \otimes S_2(x,y) = F^{-1}\{F[S_1] \cdot F^*[S_2]\}$$

Dabei sind $S_1$ und $S_2$ zwei allgemeine zweidimensionale Funktionen oder Wertematrizen in der x/y-Ebene, von denen beispielsweise $S_1$ dem aktuellen Bild und $S_2$ dem Referenzmuster in der Bildebene entspricht. Die Fouriertransformierte der Funktion $S_1$ entspricht der komplexen Matrix $A(u,v)$, $\varphi(u,v)$ des aktuellen Bildes in der Fourierebene, die bereits in den Zwischenspeichern 4 und 5 vorhanden ist. Die Fouriertransformierte der Funktion $S_2$ entspricht der komplexen Matrix $A(u,v)$, $\varphi(u,v)$ des in den Referenzspeichern 6 und 7 ebenfalls schon vorhandenen Referenzmusters, das allerdings in der Stufe 15 mit den im Zwischenspeicher 14 gespeicherten $\Delta r$- und $\Delta\alpha$-Werten einer inversen Drehstreckung unterworfen werden muß; die solcherart invers drehgestreckte komplexe Referenzmatrix wird im Zwischenspeicher 16 gespeichert.

Die im Zwischenspeicher 16 gespeicherte komplexe Referenzmatrix wird nun in der Multiplikations-Stufe 21 mit der in den Zwischenspeichern 4,5 gespeicherten komplexen Objektmatrix konjugiert komplexe elementweise multipliziert und das so erhaltene komplexe Produkt im Zwischenspeicher 22 gespeichert.

Die in den Signalweg der Amplitudenmatrizen geschalteten Stufen 17—20 sind für die Funktion nicht unbedingt erforderlich und ihr Zweck wird später noch erläutert werden.

Nach Anwendung einer diskreten, zweidimensionalen Fourier-Rücktransformation in der Stufe 23 auf das im Zwischenspeicher 22 enthaltene komplexe Produkt erhält man bereits das im Zwischenspeicher 24 gespeicherte Korrelationsergebnis in Form der Korrelationsmatrix K($\Delta$x,$\Delta$y), das der linken Seite der zuletzt angegebenen Gleichung (Korrelationstheorem) entspricht. Da die auf der rechten Seite der Gleichung erwähnten Fouriertransformierten im wesentlichen ohnehin schon gespeichert sind, wird durch Ausnützung des Korrelationstheorems eine beträchtliche Zahl von Rechenschritten eingespart (Zeitvorteil). Die erhaltene zweidimensionale Korrelationsmatrix wird in der Stufe 25 für Maximumsuche auf ein oder gegebenenfalls auch mehrere Maxima (letztere im Falle mehrerer gleichartiger, gleichgroßer und gleich verdrehter Objekte an verschiedenen Stellen der x/y-Ebene—in diesem Fall erhält man nur ein Maximum im ersten Korrelationsvorgang, Stufen 11—13, aber mehrere Maxima im zweiten Korrelationsvorgang, Stufen 21—25) untersucht, wobei die aufgefundenen Koordinatenwerte für das Maximum (die Maxima) die Lage eines vorher gewählten Bezugspunktes am Bildteil (z.B. der Diagonalenschnittpunkt eines Rechtecks) in der x/y-Ebene darstellt. Die Stufe 25 liefert somit unmittelbar die $\Delta$x,$\Delta$y-Werte, um die die Lage des Bezugspunktes des aktuellen Bildteiles gegenüber dem Achsenkreuz des ursprünglichen Bildes verschoben ist.

Diese Werte werden mit den vom ersten Korrelationsvorgang (in Stufe 11) gelieferten Werten für $\Delta$r und $\Delta\alpha$ in der Ergebnis-Aufbereitungsstufe 27 gesammelt und aufbereitet (wobei insbesondere der die Vergrößerung im logarithmischen polaren Achsensystem darstellende Verschiebungswert $\Delta$r in einen Maßstabs-Vergrößerungs- bzw. Verkleinerungswert $\Delta$S umgerechnet wird).

Für ein beliebiges aktuelles Objekt (allgemeiner Index i) werden dann die Koordinatenwerte $\Delta x_i$, $\Delta y_i$, der Wert $w_i$ der Übereinstimmungswahrscheinlichkeit, der Vergrößerungs- bzw. Verkleinerungswert $\Delta$S und der Verdrehungswinkel $\Delta\alpha$ gegenüber der Normal-Bezugslage im Drucker 28 ausgedruckt bzw. aufgelistet.

Um bei fehlender Flächenstrukturierung der Objektmuster unrichtige Korrelationsergebnisse (Stufe 24) zu vermeiden, können z.B. die O-Phasenfilter 17—20 mit Proportional-Differential-Charakteristik (entsprechend einer verzerrungsfreien Konturanhebung) vorgesehen werden. Ein solches unrichtiges Korrelationsergebnis könnte z.B. dann auftreten, wenn ein strukturloses, dreieckiges Objekt mit einem ebenfalls strukturlosen kreisförmigen Referenzobjekt (wobei der Kreis mindestens ein Umkreis für das Dreieck sein müßte) zur Deckung gebracht wird; das dabei entstehende Korrelationsmaximum wäre genau so groß wie jenes bei Überlagerung zweier gleicher strukturloser Dreiecke. Dieser Fehler würde natürlich dann nicht auftreten, wenn der Kreis oder das Dreieck eine Oberflächenstruktur hätte. Bei Überlagerung zweier Dreiecke mit Konturanhebung ergibt sich hingegen ein sehr starkes Maximum im Korrelationsergebnis K($\Delta$x,$\Delta$y).

Ein O-Phasenfilter kann im vorliegenden Fall einfach realisiert werden durch frequenzabhängige Amplitudenwertanhebung in den Amplitudenmatrizen des Bildspektrums bzw. Bezugsbildspektrums (vgl. die O-Phasenfilter 17 und 19 in Fig. 1 mit jeweils nachgeschalteten Zwischenspeichern 18, 20 für die Amplitudenmatrix mit angehobenen Kontur-Amplitudenwerten).

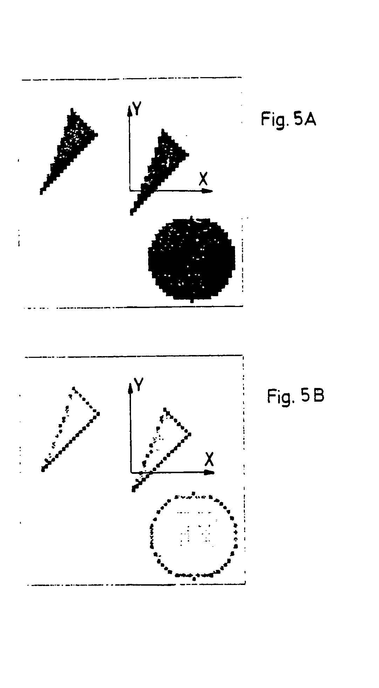

Die optischen Auswirkung einer solchen Konturanhebung soll durch die Fig. 5A und 5B veranschaulicht werden. Fig. 5A zeigt eine Bildmatrix M(x,y) mit zwei strukturlosen Dreiecken und einem ebenso strukturlosen Kreis. Fig. 5B zeigt den Effekt eines auf die in die Fourierebene transformierte Fig. 5A angewandten O-Phasenfilters, und zwar entspricht die Fig. 5B der Fourier-Rücktransformation der Matrix A(u,v) mit der Original-Phasenmatrix $\varphi$(u,v) in die Bildebene M(x,y). Das heißt, die Fig. 5A wurde in die u/v-Ebene transformiert, dort der Einwirkung eines O-Phasenfilters unterworfen und wieder in die x/y-Ebene rücktransformiert.

Obwohl solche O-Phasenfilter vor allem beim zweiten Korrelationsvorgang (Stufen 21—25) Verbesserungen hinsichtlich des deutlichen Hervortretens eines Maximums bringen, kann auch ein Einsatz solcher O-Phasenfilter beim ersten Korrelationsvorgang (Stufen 11—13) eine Verbesserung bringen, wie dies später bei der Beschreibung der Fig. 7 noch erwähnt werden wird.

Die einzig nocht enthaltene Mehrdeutigkeit in der Objektverdrehung um 180° (das Amplitudenspektrum bzw. die Amplitudenmatrix hat eine Periodizität von 180°) kann durch eine weitere inverse Fouriertransformation des in Stufe 21 ausgeführten Produktes der Bildspektren mit einem zusätzlich um 180°C verdrehten drehgestreckten Referenzspektrum bestimmt werden. D.h. es wird zweimal aus der u/v-Ebene in die x/y-Ebene rücktransformiert, wobei die in Stufe 15 ausgeführte inverse Drehstreckung einmal mit den Werten $\Delta$r,$\Delta\alpha$ und beim zweitenmal mit den Werten $\Delta$r, $\Delta\alpha$+180°C durgeführt wird. Dann vergleich man die beiden Korrelationsergebnisse K($\Delta$x,$\Delta$y) miteinander und kann so die Lage des akutellen Bildinhaltes oder -teiles in der x/y-Ebene eindeutig angeben.

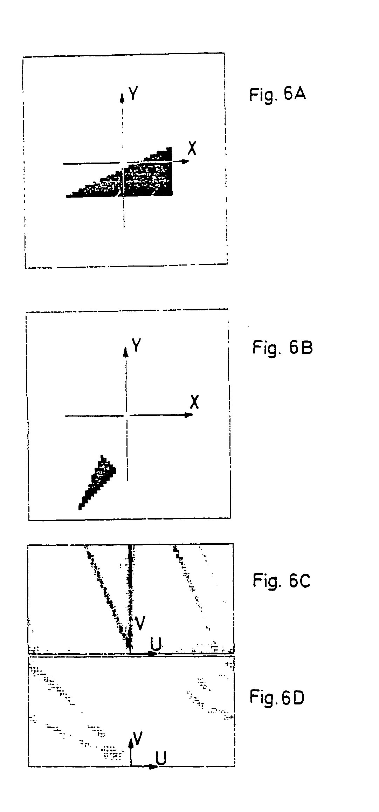

Es wird nunmehr ein Beispiel eines erfindungsgemäßen Identifikations- und Suchvorgang unter Bezugnahme auf die Fig. 6A—6D kurz besprochen:

Die Fig. 6A zeigt eine Matrix M(x,y) (im Zwischenspeicher 2 in Fig. 1) mit Bildinhalt "Dreieck" in der x/y-Ebene als Referenzmuster in einer Normallage, das in einem Lernvorgang in je einen der Referenzspeicher 6, 7 in der u/v-Ebene und in einen der Referenzspeicher 10 in der $r_1$/$\alpha$-Ebene eingelesen werden kann.

Fig. 6B zeigt eine Matrix M(x,y) (im Zwischenspeicher 2 in Fig. 1) als zu identifizierendes Bild in der x/y-Ebene. Das Dreieck wurde um 45° gegenüber der Normallage gedreht, im Maßstab 2:1 verkleinert und lageverschoben.

Fig. 6C zeigt die Amplitudenmatrix A(u,v) (im Speicher 7, Ref. 1 in Fig. 1) des einer zweidimensionalen Fouriertransformation unterworfenen Referenzmusters (M(x,y) von Fig. 6A.

Fig. 6D zeigt die Amplitudenmatrix A(u,v) (im Zwischenspeicher 4 in Fig. 1) der der gleichern zweidimensionalen Fouriertransformation unterworfenen Matrix M(x,y) von Fig. 6B; es ist deutlich die Verbreiterung der Strichmuster in der u/v-Ebene als Folge der Verkleinerung des Dreiecks in der x/y-Ebene zu erkennen und die Verdrehung des Strichmusters in Fig. 6D gegenüber jenem in Fig. 6C im gleichen Ausmaß (45°) der Verdrehung des Dreiecks in Fig. 6B gegenüber der Lage in Fig. 6A. (Die ebenfalls vorhandene Verlängerung der Strichmuster in der u/v-Ebene in Richtung des Striches infolge der Verkleinerung des Dreiecks in der x/y-Ebene ist mangels struktureller Details nicht erkennbar, es wird diesbezüglich aber auf die Fig. 2A—2D einerseits und die Fig. 3A—3D andererseits verwiesen).

Fig. 6E zeigt die Referenz-Amplitudenmatrix $A(r_1,\alpha)$ im Referenzspeicher 10, d.h. nach der in der Umwandlungsstufe 8 durchgeführten Transformation der Amplitudenmatrix A(u,v) in logarithmische Polarkoordinaten. Die Fig. 6F zeigt die in analoger Weise in logarithmische Polarkoordinaten transformierte, im Zwischenspeicher 9 gespeicherte Amplitudenmatrix $A(r_1,\alpha)$ des zu identifizierenden Bildes, wobei die Koordinaten $r_1$ und $\alpha$ auf einem orthogonalen Achsenkreuz aufgetragen sind.

Ein Vergleich der Fig. 6F mit Fig. 6E zeigt die Verschiebung der Amplitudenmatrix der Fig. 6F gegenüber der Referenz-Amplitudenmatrix sowohl in Richtung der $r_1$-Achse (=Verkleinerung des zu identifizierenden Dreiecks gemäß Fig. 6B gegenüber dem Referenzmuster gemäß Fig. 6A) als auch in Richtung der $\alpha$-Achse (=Verdrehung des Dreiecks gemäß Fig. 6B gegenüber dem Referenzmuster gemäß Fig. 6A).

Wären die beiden Amplitudenmatrizen des Referenzmusters und des zu analysierenden Bildes in einer Polarkoordinatenebene mit nicht logarithmischem r-Maßstab aber orthogonalem Achsenkreuz wie in Fig. 6E und 6F aufgezeichnet worden, so wäre die Darstellung längs der $\alpha$-Achse die gleiche wie in den Fig. 6E und 6F, die Darstellung längs der r-Achse wäre allerdings statt einer Parallelverschiebung in r-Richtung eine Drehung bzw. Streckung in r-Richtung.

Hauptvorteil des logarithmischen r-Maßstabes ist somit, daß verschieden große bzw. von der Kamera verschieden weit entfernte Objekte stets gleich große Amplitudenmatrizen im orthogonalen $r_1$, $\Delta\alpha$-System ergeben. Dies erleichtert den Korrelationsvergleich wesentlich.

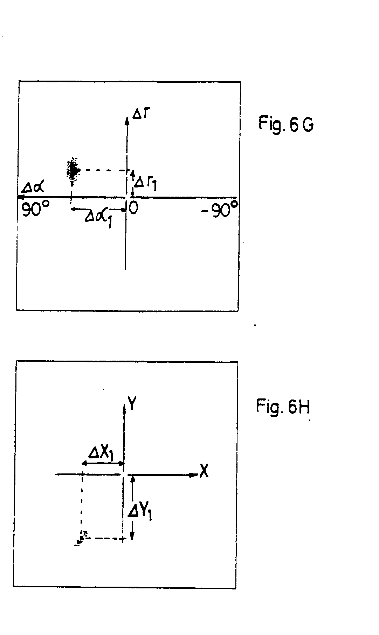

In Fig. 6G ist das nach der Korrelationsstufe 11 im Zwischenspeicher 12 vorliegenden Korrelationsergebnis $K(\Delta r,\Delta\alpha)$ dargestellt; es ist nur ein Maximum im linken oberen Quadranten vorhanden, das in der Stufe 13 für die Maximumsuche detektiert wird. Die Amplitude dieses Maximums gibt den Wahrscheinlichkeitswert $w_1$ für die Übereinstimmungswahrscheinlichkeit von zu identifizierenden Bildinhalt und Referenzmuster wieder, während die Lage des Maximums im $\Delta r,\Delta\alpha$-Achsenkreuz exakt mit den Voraussetzungen gemäß Fig. 6A und 6B übereinstimmen: Verkleinerung des zu identifizierenden Bildinhaltes um den Faktor $\Delta r_1$ und Verdrehung um $\Delta\alpha_1$ gegenüber dem Referenzmuster.

Es versteht sich, daß das zunächst noch unbekannte, zu identifizierende Bilder zunächst der Reihe nach mit allen im Referenzspeicher enthaltenen Referenzobjekten korreliert werden muß und daß erst der bei diesem Vorgang erzielte höchste Amplitudenwert des Korrelationsgebirges $K(\Delta r,\Delta\alpha)$ (d.h. der größte w-Wert) die Identität des zu identifizierenden Objektes festlegt. Um Zeit zu sparen, kann dieser Suchvorgang auch in einer hierarchischen Ordnung vor sich gehen (Einordnung nach allgemeinen, groben Klassifizierungsmerkmalen und immer weitere Verfeinerung der Klassifizierung in Untergruppen).

Fig. 6H zeigt bereits das im Zwischenspeicher 24 vorliegende Ergebnis $K(\Delta x,\Delta y)$ des zweiten Korrelationsvorganges zur Lagebestimmung. Wie schon gesagt, wird zu diesem Zweck aus den ohnehin vorhandenen Referenzspeichern 6, 7 die komplexe Matrix des Referenzobjektes entnommen, mit den Werten für $\Delta r_1$ und $\Delta\alpha_1$ invers drehgestreckt (Stufen 15, 16) und konjugiert komplex mit der komplexen Matrix des aktuellen Objektes multipliziert (Stufen 21, 22). Die anschließende zweidimensionale Fourier-Rücktransformation (Stufen 23, 24) ergibt bereits durch die Lage der Korrelationsmaxima:

Die Lage des identifizierten Bildinhaltes (x/y-Wert), also die vorher abgespaltenen Suchdimensionen, sowie das allfällige Mehrfachauftreten gleich großer und parallelverschobener Objekte in der x/y-Ebene.

Im betrachteten Fall der Fig. 6H geben die Koordinatenwerte $\Delta x_1$, $\Delta y_1$ des von der Maximumsuch-Stufe 25 im Korrelationsergebnis $K(\Delta x, \Delta y)$ aufgefundenen einzigen Maximums jene Werte an, um die z.B. der Bezugspunkt (etwa dem Halbierungspunkt der längsten Dreieckseite entsprechend) des Referenzmusters in der x/y-Ebene (Bildebene) verschoben werden muß, um mit dem Bezugspunkt des gesuchten, aktuellen Bildinhaltes (gemäß Fig. 6B) übereinzustimmen bzw. umgekehrt.

Falls in speziellen Fällen durch die Aufgabenstellung die Objektentfernung (Größe) nicht variieren kann (Tischentfernung bekannt, keine Stapelung, d.h. Maßstab bekannt) und nicht gleichartige Objekte verschiedenen Maßstabs, d.h. unterschiedlich große Objekte gleicher Art, z.B. verschieden große Dreiecke, auftreten können, degeneriert die zweidimensionale polare Korrelation der Amplitudenspektren zu einer eindimensionalen Korrelation auf Verdrehung.

Sinngemäßes gilt bei der fixen Vorgabe einer Lagekoordinate für die Lagekorrelation.

Für den Fall Videobildanalyse bietet sich bei dreidimensionaler Aufgabenstellung die Anwendung zweier oder auch mehrerer örtlich getrennt positionierter Aufnahmesysteme, z.B. Kameras, und direkter Vergleich der Ergebnisse oder bei hinreichenden Objekteigenschaften, d.h. signifikanten Eigenschaften, an denen das Objekt erkennbar ist, die Anwendung nur eines Aufnahmesystems an. In beiden Fällen muß die Referenzbibliothek alle relevanten Objektansichten enthalten, da man ja von Haus aus nicht weiß, wie das Aufnahmesystem das Objekt erfassen wird.

Das in Fig. 7 gezeigte Ausführungsbeispiel für ein System zur Durchführung des erfindungsgemäßen Verfahrens unterscheidet sich von dem in Fig. 1 gezeigten System im wesentlichen durch folgende Merkmale, auf die im folgenden noch näher eingegangen wird: Verwendung der Leistung (nicht der Amplitude) nach der ersten Fouriertransformation, Verwendung und Speicherung komplexer Matrizen ohne gesonderte Aufspaltung in reelle Amplituden und Phasenmatrix, Anhebung der Leistung mit dem Quadrat der Raumfrequenz im Fourierbereich und anschließende Durchführung der ersten Korrelation zur Identifizierung und Drehstreckungsbestimmung nach dem Korrelationstheorem (Faltungssatz).

Über eine Videobildkamera 1 wird ein zu analysierendes Objekt aufgenommen und dessen Bildverteilung in der Bildebene (x/y-Ebene) als zweidimensionale Matrix $g_2(x,y)$ im Zwischenspeicher 2 gespeichert. Es ist eine Stufe 3 zur Durchführung einer zweidimensionalen Fouriertransformation vorgesehen. Die so erhaltene komplexe Bildmatrix im Fourierbereich ist mit $G_2(u,v)$ bezeichnet. Aus ihr soll nun ein reelles Leistungsspektrum gewonnen werden, und zwar nicht in Abhängigkeit von kartesischen Raumfrequenzkoordinaten $(u,v)$, sondern in Abhängigkeit von bezüglich der Radialkoordinate logarithmischen Polarkoordinaten, um eine spätere Drehstreckungs-Korrelation durch zwei lineare Verschiebekorrelationen ausführen zu können. Die Verwendung der Leistungsmatrix anstelle der in Fig. 1 verwendeten Amplitudenmatrix hat den Vorteil, daß die bei mehreren verschiedenen Bildinhalten bzw. -teilen, welche in einem Bild enthalten sind, im Komplexen gültige Additivität bis auf additive Interferenzfaktoren erhalten bleibt, wobei gerade in diesen additiven Interferenzfaktoren die Information über die Relativlage der einzelnen Bildinhaltsteile steck und diese Information daher als ein Charakteristikum des Bildinhaltes erhalten bleiben muß.

Beim Übergang auf halblogarithmische Polarkoordinaten, die ihrerseits ein rechtwinkeliges Raster bilden, sind Interpolationen notwendig. Dabei ist zu beachten, daß in logarithmischer r-Richtung keine konstante Auflösung vorliegt. Das Shannon'sche Abtasttheorem ("Die höchste abtastbare Frequenz bei N Stützstellen beträgt N/2") kann für alle r-Werte dadurch erfüllt werden, daß die Auflösung beim maximalen r-Wert noch mindestens gleich der auflösung im kartesischen u/v-Raster ist (für kleinere r-Werte ist sie dann höher).

Zum Erhalt der Leistungsmatrix ist ein Quadriervorgang erforderlich. Eine Ermittlung der Leistungsmatrix durch Quadrieren der Amplitudenmatrix der Matrix $G_2(u,v)$ über dem kartesischen Raster wäre prinzipielle denkbar. Allerdings ist dabei zu beachten, daß eine so erhaltene kartesische Leistungsmatrix einen Frequenzgehalt bis zum Doppelten der Amplitudenmatrix hat, was bei Einhaltung des Shannon'schen Abtasttheorems bei der Interpolation zur Umkoordinatisierung in halblogarithmische Polarkoordinaten eine doppelte Zahl von Stützstellen verlangen würde. Es ist daher günstiger, den Real- und Imaginärteil der Bildmatrix $G_2(u,v)$ in der Stufe 21 auf halblogarithmische Polarkoordinaten umzurechnen und durch anschließendes Absolutquadratbilden die gewünschte Leistungsmatrix $l_2(r,a)$ zu erhalten.

Bei einem stochastisch verteilten Bildinhalt (z.B. Bildinhalt eines Bild-Grauwertspeichers) fallen die Hüllkurven der Amplitudenspektren im Fourierraum mit 1/Raumfrequenz ab. Falls sämtliche Raumfrequenzanteile des zu analysierenden Bildes gleich bewertet korreliert werden sollen, ist daher eine Amplitudenanhebung mit der Raumfrequenz bzw. eine Leistungsanhebung mit dem Quadrat der Raumfrequenz nötig, welche durch Nullphasen-Differenzierung in der Stufe 30 durchgeführt wird.

Die Videokamera 1' nimmt das dann im Zwischenspeicher 2' (Bildebene) gespeicherte Referenzmuster $g_1(x,y)$ auf, welches in den Stufen 3', 31 und 32 analog verarbeitet wird sie die Bildmatrix $g_2(x,y)$ in den Stufen 3, 29 und 30.

Die Korrelationsstufe 11 dient zur Ermittlung der Korrelationsmatrix $C(\Delta r, \Delta a)$ durch Korrelierung der Leistungsmatrix des Bildes mit der des Referenzmusters, wobei die Korrelationsmatrix im Speicher 12 zwischengespeichert wird und deren Maximum (Maxima) durch seine (ihre) Höhe und relative Steilheit angibt (angeben), mit welcher Wahrscheinlichkeit das Referenzmuster zu einem Bildinhalt bzw. -teil des zu analysierenden Bildes Paßt und deren Maximum (Maxima) durch seine (ihre) Lage angibt (angeben), mit welcher (welchen) Verdrehung(en) und Vergrößerung(en) das Referenzmuster im Bild vorkommt. Die Korrelierung erfolgt über den Faltungssatz, indem die Leistungsmatrizen von Bild und Referenz in den Stufen 33 bzw. 34 einer weiteren Fouriertransformation unterzogen werden, die so erhaltenen Matrizen $G_{II,1}$ und $G_{II,2}$ konjugiert komplex miteinander multipliziert werden und das Produkt einer Fourierrücktransformation (Stufe 35) unterzogen wird.

Im Maximumsdetektor 13 werden die Maxima der Korrelationsmatrix klassifiziert und deren Lage $\Delta r$ und $\Delta a$ (entsprechenden der Verkleinerung und Verdrehung des Bildinhaltes gegenüber dem Referenzmusters) bestimmt.

Als Nebenergebnis bekommt man in der Ausgangsstufe 42 durch Amplitudenbildung der durch zweimalige Fouriertransformation erhaltenen Matrix $G_{II,1}$ des Referenzmusters, eine lage-, verdrehungs- und größenunabhängige Amplitudenverteilung des Musters M.

Zur vollständigen Analyse des Bildes ist noch festzustellen, wo sich der inhaltlich mit dem Referenzmuster übereinstimmende Bildinhalt im ursprünglichen Bild befindet, wozu die zweite Korrelationsstufe 38 vorgesehen ist. Das in der Stufe 16 mit einem im Maximumsdetektor festgestellten Satz von Verdrehung $\Delta a$ und Vergrößerung $\Delta r$ in Polarkoordinaten invers verschobene Referenzmuster wird in der Interpolationsstufe 37 auf kartesische Koordinaten rückinterpoliert (Matrix $G_{16r}(u,v)$. Bevor diese komplexe Matrix $G_{16r}$ der Referenz mit der komplexen Matrix $G_2(u,v)$ des Bildes durch konjugiert komplexe Multiplikation und anschließende Fourierrücktransformation (Stuffe 22) korreliert wird, werden die beiden Matrizen $G_{1\delta r}$ und $G_2$ mit einer reellen O-Phasen Filterungsmatrix multipliziert, deren Matrixelemente dem Wert nach mit dem Abstand vom Ursprung des zugrundeliegenden Fouriervariablen-Koordinatensystems zunehmen.

In den Speicherstufen 40 bzw. 41 sind die konturangehobenen Matrizen zwischengespeichert. Die nach dem Faltungssatz erhaltene Korrelationsmatrix $C(\Delta x, \Delta y)$ wird im Speicher 24 gespeichert und durch den Maximumsdetektor auf Maxima untersucht, wobei die Maxima angeben bzw. das Maximum angibt, wo sich der gesuchte Bildinhalt im zu analysierenden Bild befindet.

Um bei hohem Fremdstrukturanteil im zu analysierenden Bild ein bessere Separabilität zu erhalten, können Elemente der reellen Referenzmatrizen, die unter einem bestimmten Wert liegen, ganz auf Null gesetzt werden.

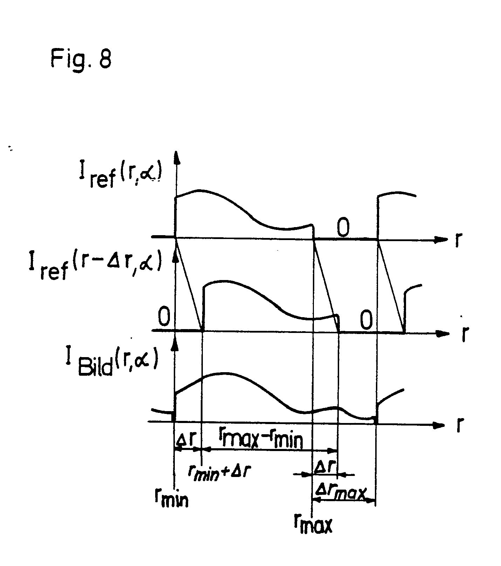

In Fig. 8 sind Werte der Intensitätsmatrix $I_{ref}$ $(r,\alpha)$ bzw. $I_{ref}$ $(r-\Delta r,\alpha)$ der Referznz und die Werte der Intensitätsmatrix $I_{BILD}$ $(r,\alpha)$ des Bildes als kontinuierliche Linien als Funktion der logarithmischen Polarkoordinate für festen Polarwinkel aufgetragen. Zur Korrelation der Referenzleistungsmatrix mit der Bildleistungsmatrix wird die Referenzleistungsmatrix gegenüber der Bildleistungsmatrix verschoben und durch Produktbildung festgestellt, inwieweit die verschobene Referenzleistungsmatrix mit der Bildleistungsmatrix bei der jeweiligen Verschiebung übereinstimmt. Hinsichtlich einer Verschiebung in Richtung des Polarwinkels $\alpha$ bestehen aufgrund der in dieser Richtung vorliegenden Periodizität der Leistungsmatrizen keine Probleme, weshalb der Winkel $\alpha$ zur besseren Darstellung in Fig. 8 festgehalten ist. In der logarithmischen r-Richtung fehlt diese Periodizität zunächst. Um dennoch ein richtiges Korrelationsergebnis auf einer effektiven Korrelationsbreite, die durch die Differenz zwischen einem bestimmten oberen Wert $r_{max}$ und einem bestimmten unteren Wert $r_{min}$ der logarithmischen Radiusskala gegeben sein soll, zu erhalten, sind im unverschobenen Referenzleistungsspektrum $I_{ref}$ $(r,\alpha)$ der Fig. 8 (obere Kurve) oberhalb des erwähnten $r_{max}$ die Werte des Referenzleistungsspektrums auf eine Breite, die der maximal betrachteten Verschiebung $\Delta r_{max}$ (d.h. der maximal betrachteten Verkleinerung der Referenz) entspricht, auf Null gesetzt, während dies im Bildleistungsspektrum $I_{BILD}$ $(r,\alpha)$ nicht der Fall ist. Man kann damit eine Quasi-Periodizität in r-Richtung erzeugen, indem die bei Verschiebung des Referenzleistungsspektrums um $\Delta r$ (entsprechend einer Verkleinerung des Referenzmusters) in Fig. 8 (oben) rechts verschwindenden Werte in Fig. 8 (Mitte) links wieder auftauchen. Da diese Werte für $\Delta r < \Delta r_{max}$ Nullen sind, ergeben die Produkte mit der unverschobenen Bildintensitätsmatrix $I_{BILD}$ $(r,\alpha)$ ebenfalls Nullen und verfälschen das Korrelationsergebnis nicht. Weil andererseits im Bildleistungsspektrum noch Werte zu über $r_{max}$ liegenden r-Werten mitgenommen sind, ist die effektive Korrelationsbreite zwar in r-Richtung verschoben, aber unabhängig von der Verschiebung $\Delta r$ konstant breit.

Es sollen nun nachfolgend Beispiele möglicher Anwendungen für das erfindungsgemaße Verfahren bzw. das erfindungsgemäße System angeführt werden.

Zunächst sollen Beispiele auf dem Gebiet der optischen Bilderkennung angeführt werden:

Robotik:

Zum exakten Positionieren von zumeist wahrnehmungsunfähigen Greifarmen auf wahlfrei angeordnete Werkstücke ist eine exakte Objektortung und Beurteilung der Lage der beachbarten Objekte erforderlich, auch wenn es sich dabei um Bruchstücke der unvorhergesehene Objekte handelt (und diese erst aus dem Arbeitsfeld geräumt werden müssen).

Eine Erweiterung könnte z.B. darin bestehen, daß der Roboter eine Verpackungsschachtel nach Erkennung und Lagebestimmung ergreift, nach dem Etikett auf den einzelnen Seiten der Schachtel zu suchen beginnt und den Klartext erkennt und liest, unabhängig davon, wie er orientiert oder verzerrt (analog zur Ausblendung einer gestörten Bildkante in der u/v-Ebene) ist. Das erfindungsgemäße Verfahren wird in diesem Fall mehrmals, schrittweise aufeinanderfolgend durchgeführt.

Damit sind auch ersten Voraussetzungen gegeben, den Robotern ein gewisses Maß an Selbständigkeit zu implementieren.

In der gleichen Ausweitungsrichtung liegt z.B. auch der automatisierte Bibliothekar, der verschiedenste Schriften lesen kann (diese Schriften müssen natürlich alle in der Referenzbibliothek enthalten sein). Es wird jeder Buchstabe erfaßt, zweidimensional fouriertransformiert usw. gemäß dem erfindungsgemäßen Verfahren. Es kann beispielsweise auch untersucht werden, wo überall auf einer Schriftseite der Buchstabe "a" vorkommt usw.

Bildauswertung:

Sämtlich, vor allem qualitativ bewertende Bildanalysearbeiten aus den Bereichen: Medizin, Biologie, Mikroskopie, Kristallographie, Kartographie, Astrophotographie, usw.

Als derzeit nur vom Menschen zu bewältigendes Beispiel aus der Biologie sie die Untersuchung einer Probe unter dem Mikroskop erwähnt, wobei die Frage beantwortet werden soll, wieviele ovale Bakterien und wieviele aufgebrochene Bakterien vorhanden sind und wo am Bild sich diese befinden. Nach Eingabe (Lerneffekt) der Bilder von ovalen und aufgebrochenen Bakterien in die Referenzspeicher ist diese Fragestellung durch das erfindungsgemäße Verfahren bzw. System auf automatischem Wege zu beantworten.

EP 0 252 096 B1

Bildszenenanalyse:

Personenerkennung, Objekterkennung allgemein (z.B. Zählung von Autotypen),...

Adaptive Anpassung einer hierarchisch, abstrakt organisierten Referenzdatei an die Umwelt—Optimierung, Aufbau eines Umweltmodelles. Unter "Umwelt" bzw. auch Außenwelt werden hier alle Gegenstände außerhalb des erfindungsgemäßen Systems verstanden, die klassifizierbar sind und die eventuell vom Auswerter selbständig zu einer übergeordneten Referenzkartei abstrahiert werden können. Hierauf wird im folgenden noch näher eingegangen werden. automatischer Schriftleser (Billigversion):

Wenn die Zeichengrobposition durch andere Methoden bestimmbar ist, reicht das erfindumgsgemäße Verfahren trotz Zulassung von Zeichenverfälschungen hin, mittels billiger und kleiner Systeme rasche Dekodierung zu erreichen. Die Billigversion ist dann gegeben, wenn die Lage der Buchstaben auf eine kleine Fläche einschränkbar bzw. bekannt ist und wenn nur geringe Verdrehungen zu erwarten sind; dann können beim erfindungsgemäßen Verfahren und System Vereinfachungen vorgenommen werden.

Bewegungsidentifikation (Vergleich aufeinaderfolgender Bilder):

Automatische Suche nach ein und demselben Objekt in Folgebildern (Z.B. wird ein im 1. Bild vorhandenes Objekt als Referenzobjekt eingespeichert und nachfolgend untersucht, wo dieses Objekt in allen nachfolgenden Bildern auftritt bzw. sich befindet).

Bewegungsverfolgung eines Objektes:

Nach einmaliger Objektidentifikation ist nur noch Korrelation in den vier Objekt- bzw. Suchdimensionen Lage in zwei Achsen, Vergrößerung und Verdrehung, bzw. sich ändernde Objektionsicht (falls sich diese infolge der Bewegung so stark ändert, daß das ursprüngliche Referenzbild das Objekt in der neuen Lage nicht mehr erkennbar machen würde) erforderlich. Diese Anwendung tritt auf, wenn beispielsweise ein Roboter ein Objekt bzw. Werkstück vom Fließband nehmen soll. Es kann hiebei die Geschwindigkeit und Richtung der Bewegung ermittelt werden, um das bewegte Objekt auch ohne idealen Hintergrund gut verfolgen zu können.

Die beiden zuletzt genannten Anwendungen treten z.B. bei der automatischen Analyse von Nebelkammerbildern oder in der Astronomie bei aufeinanderfolgenden Sternaufnahmen auf.

Nunmehr sollen Beispiele für die Identifikation beliebig skalierter 4-dimensionaler Muster (d.h. mit 4 Suchdimensionen, nämlich Lage x,y, Verdrehung und Vergrößerung, behafteter Muster) oder schrittweise auf 4 Suchdimensionen rückführbarer Muster angeführt werden:

Wortweise oder satzweise Bearbeitung von Sprachsignalen als zweidimensionale Muster (d.h. flächig von oben betrachtet) beispielsweise der Koordinaten Zeit/Amplitude oder Zeit/Frequenzgehalt (z.B. Vocoder mit technischen Frequenzen) oder Zeit/Formantengehalt (normierte Lautanteile der menschlichen Sprache, verbesserter Vocoder) unabhängig von Lautstärkeschwankungen und Tempowechsel.

Abstrakte Ähnlichkeitsvergleiche durch Untersuchung des Korrelationsgebirges zweiter Stufe (z.B. Stilvergleiche von Malern; wenn das System 2-3 Bilder eines Malers kennt, ist die Zuordnung eines neuen, vierten Bildes zu diesem Maler möglich).

Datenbankabbildung (Fehlschreibausscheidung, Wortähnlichkeitserkennung). Z.B. wenn in einer Datenbank fehlerhafte Eintragungen vorgenommen werden, sollen diese durch die zweidimensionale Fouriertransformation samt nachfolgendem Korrelationsvorgang und anschließender Rücktransformation trotz der Fehler erkennbar bzw. auffindbar sein. Es können aber auch beispielsweise mathematische Symbole in einer Kartei abgespeichert werden, dann kann eine mathematische Formel eingelesen werden, die mit gespeicherten gleichen oder ähnlichen Formeln strukturell verglichen wird. Die Lage der aufzusuchenden Formeln ist dabei egal, da sie bei der Fouriertransformation herausfällt.

Mit dem vorliegenden Verfahren ist es ähnlich wie es bei holographischen Systemen bereits bekannt ist—möglich, abstrakte Oberbegriffe von Objektgruppen (in der Bildebene) zu bilden und daraus hierarchische Suchstrukturen zu schaffen. Die Gesamttransformation von $g_1(x,y)$ in $G_{II,1}$ bzw. $A_{II,1}$ stellt durch Wegfall der Parameter Position, Größe und Orientierung und andererseits durch Aufzeigen geometrischer Eigenschaften einen Abstraktionsschritt dar, wobei hier ein Gegensatz zu bekannten holographischen Abstraktionsschritten vorteilhafterweise auch dei Parameter Größe und Orientierung wegfallen.

Unter Abstraktion im weiteren Sinn versteht man das Bilden von Oberbegriffen aus einer endlichen Stichprobe der Unterbegriffe. Da das vorliegende Verfahren Vergleiche auch nicht ideal identer, sondern nur strukturell ähnlicher Muster erlaubt, kann der verstärkende Effekt lage-, größen- und orientierungsunabhängiger, aber strukturbezogener Musteraddition genützt werden.

Bei Vorliegen einer Anzahl von unbekannten Objektbildern, welche sich einer Reihe von Objektgruppen zuordnen lassen (z.B. Gesichter, Autos etc.) kann zwischen diesen in allen möglichen paarweisen Kombinationen die Korrelation zur Ermittlung der Übereinstimmungswahrscheinlichkeit (=Ähnlichkeitsfaktor) ausgeführt werden (anstelle zwischen einer Referenz und einem zu identifizierenden Bild) und sodann durch Bewertung des Ähnlichkeitsfaktors über Zugehörigkeit zu einer gemeinsamen Gruppe entschieden werden. Socherart ist bereits die Nachbildung der voraussetzungsgemäß bestehenden Gruppenzuordnungen möglich.

Innerhalb jeder dieser Gruppen können nun beispielsweise die Spektren nach inverser Drehstreckung und Verschiebung auf gemeinsame willkürliche Normfaktoren addiert werden. Das Ergebnis bzw. seine inverse Fouriertransformierte stellt dann sozusagen den strukturellen Durchschnitt der Einzelbilder der Gruppe, unabhangig von ihrer jeweiligen Lage, Größen- und Orientierungswerten dar und kann somit im Weiteren als Oberbegriff zur Identifikation neuer Objekte herangezogen werden, ohne immer sämtliche Einzelbilder aller Gruppen durchsuchen zu müsen.

Die Erstellung einer solchen hierarchischen Suchstruktur sowie Einordnen und verhältnismäßige Berücksichtigung im Überbegriff kann durch ein System, welches das gegenständliche Verfahren durchführt, zusätzlich absolut selbständig vollzogen werden. Es ist also ein automatischer Aufbau, eine Aktualisierung und Benützung sich ständig adaptierender, hierarchisch mit aufsteigendem Abstraktionsgrad gegliederter Datenstrukturen und Umweltmodelle möglich.

Ebenso wie die Abstraktion ist die Assoziation und damit die Schaffung von Querverweisen aufgrund von Teilidentitäten im Bereich der Holographie bekannt. Holographische Beugungs- und Interferenzmuster lassen sich mit Hilfe der Fouriertransformation beschreiben.

Ist beispielsweise die Fouriertransformierte $G_1(u,v)+G_2(u,v)$ eines Bildes $g_1(x,y)+g_2(x,y)$ bestehend aus den Repräsentanzen zweier verschiedener Objekte als gewünschte Assoziationsverknüpfung gegeben, so ergibt die Bildung des Leistungsspektrums

$$I=|G_1+G_2|^2=G_1 \cdot G_1{}^*-G_2 \cdot G_2{}^*+G_1 \cdot G_2{}^*+G_1{}^*+G_2.$$

Wird nun dieses Spektrum mit der Fouriertransformierten einer der beiden Repräsentanzen, beispielsweise $G_1$ multipliziert, und das Ergebnis fourierrücktransformiert, so ergibt sich für den Teilterm

$$G_1{}^* \cdot G_2: F^{-1}\{G_1{}^* \cdot G_2 \cdot G_1\}=g_1 \otimes g_1{}^* \otimes g_2,$$

das ist die Autokorrelation von $g_1$, ideal ein Diracimpuls, gefaltet mit $g_2$, was je nach Güte der Autokorrelation angenähert $g_2$ ergibt. Durch $g_1$ wird also $g_2$ assoziativ aus dem Summenspektrum rekonstruiert und umgekehrt, während Multiplikation von I mit einem fremden Spektrum statistisches Rauschen zum Ergebnis hat. Dies führt zur Möglichkeit des automatischen Aufbaues sich verzweigender Assoziationsketten.

Derartige assoziative Prozesse können im Zusammenhang mit dem vorliegenden Verfahren wiederum unabhängig von Größe, Lage und Orientierung der speziellen Musterrepräsentanzen ausgeführt und Assoziationsketten selbständig aufgebaut werden.

So wie sämtliche Aussagen zum gegenständlichen Verfahren vor allem in Hinblick auf optische Bilder und Muster formuliert wurden, aber auf zweidimensionale Signale beliebigen Ursprungs angewendet werden können, ist insbesonders Abstraktion und Assoziation auch unter dem Aspekt nicht visueller, u.U. selbst bereits abstrakte Inhalte symbolisierender Muster zu betrachten.

**Patentansprüche**

1. Verfahren zur Analyse eines zweidimensionalen Bildes, wobei die strukturelle Übereinstimmung von gespeicherten Referenzmustern mit Bildinhalten bzw. -teilen, unabhängig von der Lage des genannten Bildinhaltes bzw. -teiles im zu analysierenden Bild ermittelt wird, indem das Bild einer zweidimensionalen Fouriertransformation unterzogen wird und die abgespaltene Amplitudenverteilung bzw. eine daraus ermittelbare Verteilung mit Amplitudenverteilungen bzw. daraus ermittelbare Verteilungen der Referenzmuster im Fourierbereich unter Ermittlung der jeweiligen Übereinstimmungswahrscheinlichkeit, des Verdrehwinkels und des Vergrößerungsfaktors zwischen Referenzmuster und Bildinhalt bzw. -teil verglichen wird, dadurch gekennzeichnet, daß die Speicherung und Verarbeitung des Bildes und der Referenzmuster bzw. deren Fouriertransformierter in digitaler Form vollzogen werden und daß zur Lokalisierung eines mit einem Referenzmuster mit der ermittelten Übereinstimmungswahrscheinlichkeit übereinstimmenden Bildinhaltes bzw. -teiles im ursprünglichen Bild das betreffende Referenzmuster bzw. dessen Fouriertransformierte durch inverse Drehstreckung mit dem ermittelten Verdrehwinkel und Vergrößerungsfaktor dem genannten Bildinhalt bzw. -teil hinsichtlich Größe und Orientierung angeglichen und schließlich festgestellt wird, bei welcher Lage bzw. bei welchen Lagen das so umgeformte Referenzmuster maximal mit einem Ausschnitt des Bildes übereinstimmt.

2. Verfahren nach Anspruch 1, dadurch gekennzeichnet, daß aus dem nach der zweidimensionalen Fouriertransformation vorliegenden komplexen Spektrum durch Bildung des Absolutquadrates eine reelle Leistungsmatrix gebildet wird, die mit analog gebildeten und gespeicherten Leistungsmatrizen der Referenzmuster verglichen wird.

3. Verfahren nach einem der Ansprüche 1 oder 2, dadurch gekennzeichnet, daß die im Fourierbereich vorliegende Amplitudenverteilung des Bildes bzw. eine daraus ermittelbare Verteilung in Form einer reellen zweidimensionalen Bildmatrix in Polarkoordinaten ermittelt wird und daß anschließend eine zweidimemsionale, polare Drehstreckungs-Korrelation dieser in Polarkoordinaten vorliegenden Bildmatrix mit ebenfalls in Polarkoordinaten vorliegenden reellen Referenzmatrizen (Amplitudenverteilung bzw. daraus ermittelbare Verteilung der Referenzmuster) vor gespeicherten Referenzmustern durchgeführt wird, als deren Ergebnis Matrixwerte für Übereinstimmungswahrscheinlichkeiten der korrelierten reellen

EP 0 252 096 B1

Bild- und Referenzmatrizen samt zugehörigen Verdrehwinkeln und Vergrößerungsfaktoren der Bildmatrix in bezug auf die Referenzmatrizen erhalten werden.

4. Verfahren nach Anspruch 2, dadurch gekennzeichnet, daß zur Bildung der reellen Leistungsmatrix in halblogarithmischen Polarkoordinaten zunächst der Realteil und der Imaginärteil der nach der zweidimensionalen Fouriertransformation erhaltenen komplexen Matrix für sich durch konstant zugeordnete Interpolation auf halblogarithmische Polarkoordinaten umkoordinatisiert werden, worauf durch Quadrieren von Real- und Imaginärteil und anschließendes Addieren die Leistungsmatrix ermittelt wird.

5. Verfahren nach Anspruch 3, dadurch gekennzeichnet, daß das Maximum (die Maxima) der als Ergebnis der Korrelation erhaltenen übereinstimmungswahrscheinlichkeits-Matrix (Korrelationsmatrix) detektiert wird (werden) und die zu diesem Maximum (zu diesen Maxima) gehörenden Werte für den (die) Verdrehungswinkel und den (die) Vergrößerungsfaktor(en) der zur Erzielung der relativen Übereinstimmung des Bildinhaltes bzw. -teiles (der Bildinhalte bzw. -teile) mit dem jeweiligen Referenzmuster auf letzteres ausgeübten inversen Drehstreckung(en) gespeichert werden.

6. Verfahren nach Anspruch 4 oder 5, dadurch gekennzeichnet, daß die zweidimensionale Bildmatrix im Fourierbereich in Polarkoordinaten mit logarithmischen Radius-Maßstab ermittelt wird und daß auch die im Fourierbereich vorliegenden Referenzmatrizen der Referenzmuster in Polarkoordinaten mit logarithmischen Radius-Maßstab gespeichert werden, wodurch die Drehstreckung zu einer Drehverschiebung wird, worauf eine polare Drehverschiebungs-Korrelation durchgeführt wird.

7. Verfahren nach Anspruch 6, dadurch gekennzeichnet, daß die Koordinaten des logarithmischen Polarkoordinatensystems auf ein rechtwinkeliges Achsenkreuz übertragen werden, worauf eine diskrete, zweidimensionale, rechtwinkelige Korrelation der reellen Bildmatrix mit den Referenzmatrizen im Fourierbereich durchgeführt wird, wobei die Drehstreckung bzw. Drehverschiebung in zwei Verschiebungen längs der Achsen des Achsenkreuzes aufgelöst wird.

8. Verfahren nach einem der Ansprüche 1 bis 7, dadurch gekennzeichnet, daß in einem Lernvorgang bekannte Referenzbilder eingegeben bzw. eingelesen werden und daß die nach der zweidimensionalen Fouriertransformation dieser Referenzbilder im Fourierbereich vorliegenden Matrizen als komplexe Matrizen oder als getrennte Amplituden- und Phasenmatrizen in Referenzspeichern in vorzugsweise abstrakt hierarchischer Ordnung gespeichert werden.

9. Verfahren nach einem der Ansprüche 1 bis 8, dadurch gekennzeichnet, daß die nach der ersten Fouriertransformation des Bildes als reelle Bildmatrix vorliegenden Amplitudenverteilung bzw. daraus ermittelbare Verteilung und die nach der ersten Fouriertransformation des Referenzmusters als reelle Referenzmatrix vorliegende Amplitudenverteilung bzw. daraus ermittelbare Verteilung im Fourierbereich korreliert werden, indem die reelle Bildmatrix und die reelle Referenzmatrix jeweils einer zweiten zweidimensionalen Fouriertransformation unterzogen und die so erhaltenen komplexen Matrizen elementweise konjugiert komplexe miteinander multipliziert werden und die Produktmatrix hierauf fourierrücktransformiert wird.

10 Verfahren nach einem der Ansprüche 1 bis 9, dadurch gekennzeichnet, daß zur Ermittlung der Lage bzw. der Lagen eines in der Fourierebene mit einer bestimmten Übereinstimmungswahrscheinlichkeit mit einem drehgestreckten Referenzmuster erkannten Bildinhaltes bzw. -teiles in der ursprünglichen Bildebene das mit den ermittelten Werten für Verdrehwinkel und Vergrößerungsfaktor invers drehgestreckte Referenzmuster in dieser Bildebene mit dem zu analysierenden Bild verglichen wird und das Übereinstimmungsmaximum bzw. die Übereinstimmungsmaxima detektiert werden.

11. Verfahren nach einem der Ansprüche 1 bis 9, dadurch gekennzeichnet, daß zur Ermittlung der Lage bzw. der Lagen eines in der Fourierebene mit einer bestimmten Übereinstimmungswahrscheinlichkeit mit einem drehgestreckten Referenzmuster erkannten Bildinhaltes bzw. -teiles in der ursprünglichen Bildebene die mit den ermittelten Werten für Verdrehwinkel und Vergrößerungsfaktor invers drehgestreckte komplexe Referenzmatrix konjugiert komplex und elementweise mit der komplexen Bildmatrix im Fourierbereich multipliziert wird, worauf die komplexe Produktmatrix einer zweidimensionalen Fourierrücktransformation unterzogen wird, und daß schließlich das Maximum (die Maxima) der als Ergebnis dieser Korrelation erhaltenen Übereinstimmungswahrscheinlichkeitsmatrix detektiert wird (werden) und die zu diesem Maximum (zu diesem Maxima) gehörenden Koordinatenwerte für die Lage(n) des erkannten Bildinhaltes bzw. -teiles im ursprünglichen Bild ermittelt werden.

12. Verfahren nach Anspruch 11, dadurch gekennzeichnet, daß bei Verwendung von halblogarithmischen Polarkoordinaten die inverse Drehstreckung der komplexen Referenzmatrix durch inverse ganzzahlige Verschiebung bezüglich der logarithmischen Polarkoordinaten durchgeführt wird, worauf die so erhaltene Matrix durch konstant zugeordnete Rückinterpolation auf kartesische Koordination umkoordinatisiert wird.

13. Verfahren nach einem der Ansprüche 10 bis 12, dadurch gekennzeichnet, daß eine weitere inverse Drehstreckung bzw. Drehverschiebung (bei logarithmischen Polarkoordinaten) mit dem um 180° veränderten ermittelten Wert für den Verdrehwinkel und dem ermittelten Wert für den Vergrößerungsfaktor durchgeführt wird, worauf nach Durchführung der Korrelation gegebenenfalls vorhandene Maxima der Übereinstimmungswahrscheinlichkeit detektiert werden.

14. Verfahren nach Anspruch 11, dadurch gekennzeichnet, daß sowohl die mit dem ermittelten Wert für den Verdrehwinkel bzw. die mit diesem um 180° veränderten Wert invers drehgestreckte komplexe

14

**EP 0 252 096 B1**

Referenzmatrix im Fourierbereich auch die nach der zweidimensionalen Fouriertransformation vorliegende komplexe Bildmatrix des aktuellen Bildes jeweils in eine reelle Amplitudenmatrix und eine reelle Phasenmatrix aufgespalten werden, und daß die Amplitudenmatrizen bei unveränderten Phasenmatrizen über je ein konturanhebendes O-Phasen-Filter geleitet werden, bevor sie zusammen mit den zugehörigen Phasenmatrizen der konjugiert komplexen Multiplikation unterzogen werden.

15. Verfahren nach einem der Ansprüche 1 bis 14, dadurch gekennzeichnet, daß zur Klassifizierung von Musterhähnlichkeit die Amplitude der Korrelationsmaxima der die relative Übereinstimmung zwischen der aktuellen Bildmatrix und einer Referenzmatrix im Fourierbereich angebenden Korrelationsmatrix und/oder die relative Steilheiten dieser Korrelationsmaxima herangezogen werden.

16. Verfahren nach Anspruch 15, dadurch gekennzeichnet, daß zur Ermittlung der relativen Steilheiten der Korrelationsmaxima der Korrelationsmatrix, diese logarithmiert und zweidimensional fouriertransformiert wird, worauf dieses so erhaltene zweidimensionale Spektrum vorzugsweise durch ein O-Phasen-Filter elementweise mit dem Abstand des jeweiligen Fouriervariablenpaares vom Ursprung der Fourierebene multipliziert und anschließend dieses neue Spektrum einer Fourier-Rücktransformation unterzogen wird, wobei die Amplitudenmaxima der so erhaltenen Matrix ein direktes Maß für die relative Steilheit der Korrelationsmaxima der Korrelationsmatrix sind.

17. Verfahren nach einem der Ansprüche 1 bis 16, dadurch gekennzeichnet, daß zur besseren Separabilität bei hohem Fremdstrukturanteil im zu analysierenden Bild Elemente der im Fourierbereich vorliegenden reellen Referenzmatrizen, die unter einem bestimmten Wert liegen, auf Null gesetzt werden.

18. Verfahren nach einem der Ansprüche 1 bis 17, dadurch gekennzeichnet, daß bei Verwendung von Polarkoordinaten im Fourierbereich zur Erzeugung einer Quasiperiodizität in Richtung der Radialkoordinate für eine anschließende Korrelation in einem zwischen zwei Radialkoordinaten liegenden Fenster die oberhalb einer bestimmten Radialkoordinate liegenden Werte der reellen Referenzmatrix im Fourierbereich Null gesetzt werden und daß in der reellen Bildmatrix im Fourierbereich noch reale Werte bei größeren Radialkoordinaten (entsprechend höheren Raumfrequenzen) mitgenommen werden oder diese Werte ebenfalls Null gesetzt werden.

19. Verfahren nach Anspruch 14, dadurch gekennzeichnet, daß zur Gleichbewertung verschiedener Raumfrequenzanteile die Elemente der im Fourierbereich vorliegenden Amplitudenmatrizen des Bildes und der Referenzmuster linear mit der Raumfrequenz bzw. die Elemente der entsprechenden im Fourierbereich vorliegenden Leistungsmatrizen quadratisch mit der Raumfrequenz vorzugsweise durch ein O-Phasen-Filter angehoben werden, bevor sie miteinander korreliert werden.

**Revendications**

1. Procédé pour analyser une image bidimensionnelle, selon lequel la concordance structurelle de motifs de référence mémorisés avec des contenus ou parties d'image est obtenue, indépendamment de la position du contenu ou partie d'image précité dans l'image à analyser, en soumettant l'image à une transformation bidimensionnelle de Fourier et en comparant la répartition d'amplitudes ainsi obtenues, ou bien une répartition déductible de celles-ci, avec des répartitions d'amplitudes, ou bien des répartitions déductibles de celles-ci, du motif de référence dans le domaine de Fourier, avec détermination de la probabilité de concordance correspondante, de l'angle de rotation et du facteur d'agrandissement entre le motif de référence et le contenu ou partie d'image, caractérisé en ce que la mémorisation et le traitement de l'image et du motif de référence, ou de sa transformée de Fourier, sont effectués sous une forme numérique et en ce que, pour une localisation d'un contenu ou partie d'image concordant avec un motif de référence pour la probabilité de concordance déterminée dans l'image initiale, le motif de référence correspondant, ou sa transformée de Fourier est adapté, au moyen d'une extension angulaire inverse avec l'angle de rotation et le facteur d'agrandissement qui ont été obtenus, au contenu ou partie d'image précité en ce qui concerne la grandeur et l'orientation et il est enfin établi dans quelle position ou bien dans quelles positions le motif de référence ainsi transformé concorde au maximum avec une portion de l'image.

2. Procédé selon la revendication 1, caractérisé en ce que, à partir du spectre complexe existant après la transformation bidimensionnelle de Fourier, une matrice de puissance réelle est établie par formation du carré absolu et elle est comparée avec des matrices de puissance du motif de référence qui ont été établies et mémorisées de façon analogique.

3. Procédé selon une des revendications 1 ou 2, caractérisé en ce que la répartition d'amplitudes de l'image existant dans le domaine de Fourier, ou bien une répartition déductible de celle-ci, est obtenue sous la forme d'une matrice d'image bidimensionnelle réelle en coordonnées polaires et en ce qu'ensuite on établit une corrélation polaire bidimensionnelle par extension angulaire de cette matrice d'image, se présentant en coordonnées polaires, avec des matrices de référence réelles, se présentant également en coordonnées polaires (répartition d'amplitudes ou bien répartition, déductible de celles-ci, du motif de référence) de motifs de référence mémorisés et en résultat de cette corrélation on obtient des valeurs de matrices pour des probabilités de concordance des matrices d'image et de référence réelles obtenues par corrélation, y compris des angles de rotation et des facteurs d'agrandissement associés de la matrice d'image par rapport aux matrices de référence.

4. Procédé selon la revendication 2, caractérisé en ce que, pour l'établissement de la matrice de puissance réelle en coordonnées polaires semi-logarithmiques, initialement la partie réelle et la partie imaginaire de la matrice complexe obtenue après la transformation bidimensionnelle de Fourier sont soumises à une conversion de coordonnées pour passer à des coordonnées polaires semi-logarithmiques au moyen d'une interpolation associée constante et ensuite, la matrice de puissance est obtenue par mise au carré de la partie réelle et de la partie imaginaire et ensuite par addition.

5. Procédé selon la revendication 3, caractérisé en ce que le maximum (les maxima) de la matrice de probabilité de concordance (matrice de corrélation) obtenue en résultat de la corrélation est (sont) détecté(s) et les valeurs, correspondant à ce maximum (à ces maxima) de l'angle (des angles) de rotation et du facteur (des facteurs) d'agrandissement sont mémorisés, en vue d'obtenir la concordance relative du contenu ou partie d'image (des contenus ou parties d'image) avec le motif de référence correspondant, en relation avec l'extension angulaire inverse (les extensions angulaires inverses) exercé sur ce dernier.

6. Procédé selon la revendication 4 ou 5, caractérisé en ce que la matrice d'image bidimensionnelle est obtenue dans le domaine de Fourier en coordonnées polaires avec une échelle de rayon logarithmique et en ce qu'également les matrices de référence du motif de référence existant dans le domaine de Fourier sont mémorisées en coordonnées polaires avec une échelle de rayon logarithmique, de sorte que l'extension angulaire devient une translation angulaire, à la suite de laquelle est effectuée une corrélation polaire avec translation angulaire.

7. Procédé selon la revendication 6, caractérisé en ce que les coordonnées du système de coordonnées polaires logarithmiques sont converties dans un système de coordonnées cartésiennes et ensuite une corrélation orthogonale bidimensionelle discrète de la matrice d'image réelle est effectuée avec les matrices de référence dans le domaine de Fourier, l'extension angulaire ou bien la translation angulaire étant décomposée en deux translations le long des axes du système cartésian.

8. Procédé selon une des revendications 1 à 7, caractérisé en ce que des images de référence connues dans un processus d'enseignement sont introduites ou lues et en ce que les matrices obtenues après la transformation bidimensionnelle de Fourier de ces images de référence dans le domaine de Fourier sont mémorisées sous la forme de matrices complexes ou bien sous la forme de matrices d'amplitudes et de phases séparées dans des mémoires de référence et dans un ordre hiérarchique de préférence abstrait.

9. Procédé selon une des revendications 1 à 8, caractérisé en ce que la répartition d'amplitudes, ou bien une répartition déductible de celles-ci, obtenue après la première transformation de Fourier de l'image sous forme d'une matrice d'image réelle ainsi que la répartition d'amplitudes, ou bien une répartition déductible de celles-ci, obtenue après la première transformation de Fourier du motif de référence sous la forme d'une matrice de référence réelle, sont soumises à une corrélation dans le domaine de Fourier par le fait que la matrice d'image réelle et la matrice de référence réelle sont respectivement soumises à une seconde transformation bidimensionnelle de Fourier et que les matrices complexes ainsi obtenues sont multipliées entre elles de façon complexe et avec conjugaison par éléments, et la matrice correspondant à ce produit est ensuite soumise à une retransformation de Fourier.

10. Procédé selon une des revendications 1 à 9, caractérisé en ce que pour une détermination de la position ou des positions d'un contenu ou partie d'image, détecté dans le plan de Fourier comme ayant une probabilité de concordance déterminée avec un motif de référence étendu angulairement, dans le plan d'image initiale, le motif de référence soumis à une extension angulaire inverse avec les valeurs obtenues pour l'angle de rotation et le facteur d'agrandissement est comparé dans ce plan d'image avec l'image à analyser et le maximum ou les maxima de concordance sont détectés.

11. Procédé selon une des revendications 1 à 9, caractérisé en ce que, pour une détermination de la position du des positions d'un contenu ou partie d'image, détecté dans le plan de Fourier comme ayant une probabilité de concordance déterminée avec un motif de référence étendu angulairement, dans le plan d'image initiale, la matrice de référence complexe, qui a été soumise à une extension angulaire inverse avec les valeurs obtenues pour l'angle de rotation et le facteur d'agrandissement, est multipliée, de façon complexe, conjuguée et par éléments, avec la matrice d'image complexe dans le domaine de Fourier, ensuite la matrice complexe correspondant au produit obtenu est soumise à une retransformation bidimensionnelle de Fourier et enfin le maximum (les maxima) de la matrice de probabilité de concordance, obtenue en résultat de cette corrélation, est (sont) détecté(s) et les valeurs de coordonnées, correspondant à ce maximum (à ces maxima) pour la (les) position(s) du contenu ou partie d'image détecté sont déterminées dans l'image initiale.

12. Procédé selon la revendication 11, caractérisé en ce que, lors de l'utilisation de coordonnées polaires semilogarithmiques, l'extension angulaire inverse de la matrice de référence complexe est effectuée par une translation entière inverse en relation avec les coordonnées polaires logarithmiques et ensuite la matrice ainsi obtenue est soumise à une conversion en coordonnées cartésiennes au moyen d'une rétro-interpolation associée constante.

13. Procédé selon une des revendications 10 à 12, caractérisé en ce qu'une autre extension angulaire ou translation angulaire inverse (dans le cas de coordonnées polaires logarithmiques) est effectuée avec la valeur obtenue pour l'angle de rotation après modification de 180° et avec la valeur obtenue pour le facteur d'agrandissement et ensuite, après exécution de la corrélation, des maxima éventuellement existants de la probabilité de concordance sont détectés.

14. Procédé selon la revendication 11, caractérisé en ce qu'aussi bien la matrice de référence complexe produite par extension angulaire inverse avec la valeur obtenue pour l'angle de rotation ou bien celle produite avec la valeur angulaire modifiée de 180°, que la matrice d'image complexe de l'image réelle, obtenue après la transformation bidimensionnelle de Fourier, sont décomposées respectivement entre une matrice d'amplitudes réelle et une matrice de phases réelle et en ce que les matrices d'amplitudes sont transférées, dans le cas de matrices de phases invariantes, chacune par l'intermédiaire d'un filtre de phases-O à relèvement de contour avant d'être soumises, en même temps que les matrices de phases associées, à la multiplication complexe conjuguée.

15. Procédé selon une des revendications 1 à 14, caractérisé en ce que, pour une classification de similitudes des motifs, on fait intervenir les amplitudes des maxima de corrélation de la matrice de corrélation définissant la concordance relative entre la matrice d'image actuelle et une matrice de référence dans le domaine de Fourier et/ou les pentes relatives de ces maxima de corrélation.

16. Procédé selon la revendication 15, caractérisé en ce que, pour une détermination des pentes relatives des maxima de corrélation de la matrice de corrélation, celle-ci est soumise à une conversion logarithmique et à une transformation bidimensionnelle de Fourier et ensuite ce spectre bidimensionnelle ainsi obtenu est multiplié, par éléments et au moyen d'un filtre de phases-O, avec l'espacement entre la paire correspondante de variables de Fourier et l'origine du plan de Fourier et ensuite ce nouveau spectre est soumis à une retransformation de Fourier, les maxima d'amplitudes de la matrice ainsi obtenue établissant une mesure directe de la pente relative des maxima de corrélation de la matrice de corrélation.

17. Procédé selon une des revendications 1 à 16, caractérisé en ce que, pour obtenir une meilleure aptitude de séparation dans le cas d'une forte proportion de structure étrangère dans l'image à analyser, des éléments des matrices de référence réelles existant dans le domaine de Fourier et qui sont inférieurs à une valeur déterminée sont mis à zero.

18. Procédé selon une des revendications 1 à 17, caractérisé en ce que, lors d'une utilisation de coordonnées polaires dans un domaine de Fourier pour produire une quasi-périodicité dans la direction des coordonnées radiales en vue de l'établissement ultérieur d'une corrélation, on fait en sorte que, dans une fenêtre existant entre deux coordonnées radiales, les valeurs de la matrice de référence réelle qui sont supérieures à une coordonnées radiale déterminée soient mises à zéro dans le domaine de Fourier et en ce que, dans la matrice d'image réelle dans le domaine de Fourier, des valeurs réelles encore existantes pour des coordonnées radiales supérieures (en correspondance à des fréquences spatiales supérieures) sont prises en considération ou bien ces valeurs sont également mises à zéro.

19. Procédé selon la revendication 14, caractérisé en ce que, pour une évaluation identique de différents pourcentages de fréquence spatiale, les éléments des matrices d'amplitude de l'image et du motif de référence existant dans le domaine de Fourier sont soumis à une croissance linéaire avec la fréquence spatiale ou bien les éléments des matrices de puissance existant en correspondance dans le domaine de Fourier sont soumis à une croissance quadratique avec la fréquence spatiale, de préférence au moyen d'un filtre de phases-O, avant d'être soumis à une corrélation mutuelle.

## Claims

1. A process for analysing a two-dimensional image, wherein the structural identity of stored reference patterns with image contents or portions is determined, irrespective of the position of said image content or portion in the image to be analysed, by the image being subjected to a two-dimensional Fourier transformation operation and the separated-off amplitude distribution or a distribution which can be ascertained therefrom being compared to amplitude distributions or distributions which can be ascertained therefrom, in respect of the reference patterns, in the Fourier range, while determining the respective probability of identity, the twist angle and the enlargement factor as between the reference pattern and the image content or portion, characterised in that storage and processing of the image and the reference patterns or the Fourier transforms thereof are effected in digital form and that to locate an image content or portion in the original image, which is identical with a reference pattern with the ascertained degree of probability of identity, the respective reference pattern or the Fourier transform thereof is assimilated to said image content or portion in respect of size and orientation by inverse rotary extension with the ascertained twist angle and enlargement factor, and finally the position or positions at which the reference pattern when converted in that way has maximum identity with a section of the image is established.

2. A process acocding to Claim 1 characterised in that a real power matrix is formed from the complex spectrum which is present after the two-dimensional Fourier transformation operation, by formation of the absolute square, said matrix being compared to similarly formed and stored power matrices of the reference patterns.

3. A process according to one of Claims 1 and 2 characterised in that the amplitude distribution of the image, which is present in the Fourier range, or a distribution which can be ascertained therefrom, is ascertained in the form of a real two-dimensional image matrix in polar co-ordinates, and then a two-dimensional polar rotary extension correlation in respect of said image matrix which is present in polar co-ordinates, with real reference matrices which are also present in polar co-ordinates (amplitude distribution or distribution which can be ascertained therefrom, in respect of the reference patterns), in respect of stored reference patterns, is carried out, as a result of which matrix values are obtained for probabilities of identity in respect of the correlated real image and reference matrices with associated twist angles and enlargement factors of the image matrix in relation to the reference matrices.

EP 0 252 096 B1

4. A process according to Claim 2 characterised in that to form the real power matrix in semi-logarithmic polar co-ordinates, firstly the real portion and the imaginary portion of the complex matrix which is obtained after the two-dimensional Fourier transformation operation undergo co-ordinate conversion in themselves by constantly associated interpolation to semi-logarithmic polar co-ordinates, whereupon the power matrix is ascertained by squaring of the real and imaginary portions and then addition.

5. A process according to Claim 3 characterised in that the maximum (or maxima) of the identity probability matrix (correlation matrix) obtained as a result of the correlation operation is or are detected and the values associated with said maximum or maxima, for the twist angle or angles and the enlargement factor or factors, of the inverse rotary extension operation or operations which are applied to the respective reference pattern in order to achieve the relative identity of the image content or portion (contents or portions) with the respective reference pattern are stored.

6. A process according to Claim 4 or Claim 5 characterised in that the two-dimensional image matrix is ascertained,- in the Fourier range, in polar co-ordinates with a logarithmic radius scale and that the reference matrices, which are also present in the Fourier range, of the reference patterns, are stored in polar co-ordinates with a logarithmic radius scale whereby the rotary extension becomes a rotary shift, whereupon a polar rotary shift correlation operation is carried out.

7. A process according to Claim 6 characterised in that the co-ordinates of the logarithmic polar co-ordinate system are translated on to a right-angled axis system whereupon a discrete two-dimensional right-angled correlation operation is carried out in respect of the real image matrix with the reference matrices in the Fourier range, with the rotary extension or rotary shift being resolved into two shifts along the axes of the axis system.

8. A process according to one of Claims 1 to 7 characterised in that in a learning process known reference images are put in or read in, and that the matrices which are present after the two-dimensional Fourier transformation of said reference images in the Fourier range are stored in the form of complex matrices or separate amplitude and phase matrices in preferably abstractly hierarchical order.

9. A process according to one of Claims 1 to 8 characterised in that the amplitude distribution which is present in the form of a real image matrix after the first Fourier transformation of the image, or a distribution which can be ascertained therefrom, and the amplitude distribution which is present as a real matrix after the first Fourier transformation of the reference pattern, or a distribution which can be ascertained therefrom, are correlated in the Fourier range by the real image matrix and the real reference matrix each being subjected to a respective further two-dimensional Fourier transformation operation, and the resulting complex matrices being multiplied together in an elementwise conjugated complex mode, and the product matrix thereupon being subjected to reverse Fourier transformation.

10. A process according to one of Claims 1 to 9, characterised in that to determine the position or positions of an image content or portion, in the original image plane, which content or portion is detected in the Fourier plane with a given degree of probability of identity with a rotary-extended reference pattern, the reference pattern which is subjected to inverse rotary extension with the ascertained values in respect of twist angle and enlargement factor is compared in said image plane with the image to be analysed and the identity maximum or maxima is or are detected.

11. A process according to one of Claims 1 to 9, characterised in that to ascertain the position or positions of an image content or portion, in the original image plane, which content or portion is ascertained in the Fourier plane with a given degree of probability of identity with a rotary-extended reference pattern, the complex reference matrix which is subjected to inverse rotary extension with the ascertained values in respect of twist angle and enlargement factor is multiplied in conjugated complex and element-wise mode with the complex image matrix in the Fourier range whereupon the complex product matrix is subjected to a two-dimensional Fourier reverse transformation operation and that finally the maximum (or maxima) of the identity probability matrix obtained as a result of that correlation operation is or are detected and the co-ordinate values associated with said maximum (or maxima) is or are ascertained for the position or positions of the recognised image content or portion in the original image.

12. A process according to Claim 11 characterised in that, when using semi-logarithmic polar co-ordinates, the inverse rotary extension of the complex reference matrix is performed by inverse integral displacement with respect to the logarithmic polar co-ordinates whereupon the resulting matrix is subjected to co-ordinate conversion by constantly associated reverse interpolation to Cartesian coordination.

13. A process according to one of Claims 10 to 12 characterised in that a further inverse rotary extension or rotary shift (in relation to logarithmic polar co-ordinates) is carried out with the ascertained value, which is altered through 180°, in respect of the twist angle, and the ascertained value in respect of the enlargement factor, whereupon after the correlation operation has been carried out any maxima in respect of probability of identity that may be present are detected.

14. A process according to Claim 11 characterised in that both the complex reference matrix which is subjected to inverse rotary extension with the ascertained value in respect of the twist angle or that with said value changed through 180° and also the complex image matrix of the actual image, which is present after the two-dimensional Fourier transformation are split, each, into a real amplitude matrix and a real phase matrix, and that the amplitude matrices, with the phase matrices being unchanged, are passed by

18

way of respective contour-accentuating O-phase filters before they are subjected to the conjugated complex multiplication operation together with the associated phase matrices, whose matrix elements increase in value with the distance from the origin of the underlying Fourier co-ordinate system.

15. A process according to one of Claims 1 to 14 characterised in that for the purpose of classification of pattern similarity, the amplitude of the correlation maxima of the correlation matrix giving the relative identity between the actual image matrix and a reference matrix in the Fourier range and/or the relative degrees of steepness of said correlation maxima are used.

16. A process according to Claim 15 characterised in that to ascertain the relative degrees of steepness of the correlation maxima of the correlation matrix, it is logarithmised and subjected to two-dimensional Fourier transformation whereupon the resulting two-dimensional spectrum is multiplied preferably by an O-phase filter in an element-wise manner by the distance of the respective pair of Fourier variables from the origin of the Fourier plane, and then said new spectrum is subjected to a Fourier reverse transformation operation, the amplitude maxima of the matrix obtained in that manner being a direct measurement in respect of the relative steepness of the correlation maxima of the correlation matrix.

17. A process according to one of Claims 1 to 16 characterised in that for better separability with a high foreign structure component in the image to be analysed, elements of the real reference matrices which are present in the Fourier range and which are below a given value are set to zero.

18. A process according to one of Claims 1 to 17 characterised in that when using polar co-ordinates in the Fourier range, to produce a quasi-periodicity in the direction of the radial co-ordinates for subsequent correlation in a window between two radial co-ordinates, the values which are above a given radial co-ordinate, in respect of the real reference matrix, are set to zero, and that in the real image matrix in the Fourier range still real values are entrained at greater radial co-ordinates (corresponding to higher spatial frequencies) or said values are also set to zero.

19. A process according to Claim 14 characterised in that for equal evaluation of different spatial frequency components the elements of the amplitude matrices, which are present in the Fourier range, of the image and the reference patterns are accentuated linearly with the spatial frequency or the elements of the corresponding power matrices are accentuated quadratically with the spatial frequency, preferably by an O-phase filter, before they are correlated with each other.

Fig. 1

EP 0 252 096 B1

Fig. 2 A

Fig. 2 B

Fig. 2C

Fig. 2D

Fig. 3A

Fig. 3B

Fig. 3C

Fig. 3D

Fig. 4 A

Fig. 4 B

Fig. 4 C

Fig. 4 D

Fig. 5A

Fig. 5B

Fig. 6A

Fig. 6B

Fig. 6C

Fig. 6D

Fig. 6E

Fig. 6F

Fig. 6 G

Fig. 6H

Fig. 7

Fig. 8